# EUROPEAN PATENT APPLICATION

(11) **EP 4 422 215 A1**
(43) Date of publication of application: **28.08.2024**
(21) Application number: 23851811.2
(22) Date of filing: 08.08.2023
(51) Int. Cl.: H04S 7/00

(54) **AUDIO PLAYING METHOD AND RELATED APPARATUS**

(30) Priority: 12.08.2022 CN 202210966704; 11.11.2022 CN 202211415563
(71) Applicant: Huawei Technologies Co., Ltd., Shenzhen, Guangdong 518129 (CN)
(72) Inventor: HU, Shaowu, Shenzhen, Guangdong 518129 (CN); CHEN, Li, Shenzhen, Guangdong 518129 (CN); CHANG, Jing, Shenzhen, Guangdong 518129 (CN)
(74) Representative: Isarpatent
(86) International application number: PCT/CN2023/111689
(87) International publication number: WO 2024/032590

(57) **Abstract**

This application discloses an audio playing method and a related apparatus. An electronic device includes one or more sound generation units, and the one or more sound generation units include one or more second-part side sound generation units and one or more first-part side sound generation units. When a sound effect mode of the electronic device is a first mode, the electronic device may receive an input for playing a specified audio, and in response to the input, process audio data (also referred to as audio source data) of the specified audio of the electronic device based on the first mode, to obtain audio data corresponding to a plurality of sound generation units of the electronic device. The plurality of sound generation units of the electronic device simultaneously play the corresponding audio data. In this way, the electronic device can cooperatively play a first audio by using the first-part side sound generation unit and the second-part side sound generation unit, to improve a surround feeling and an immersion feeling of a sound field of the electronic device, and enhance an audio playing effect.

## Description

This application claims priority to Chinese Patent Application No. 202210966704.9, filed with the China National Intellectual Property Administration on August 12, 2022 and entitled "NOTEBOOK JOINT SOUND GENERATON METHOD", and to Chinese Patent Application No. 202211415563.8, filed with the China National Intellectual Property Administration on November 11, 2022 and entitled "AUDIO PLAYING METHOD AND RELATED APPARATUS", which are incorporated herein by reference in their entireties.

### TECHNICAL FIELD

This application relates to the terminal field, and in particular, to an audio playing method and a related apparatus.

### BACKGROUND

Currently, a distance between a display and a speaker of some electronic devices is long. As a result, when the electronic device plays a video, a displayed picture does not match an audio source, and a user has poor video watching experience.

### SUMMARY

This application provides an audio playing method and a related apparatus, so that an electronic device can sound cooperatively by using a sound generation unit in a first part and a sound generation unit in a second part. This provides a plurality of audio playing effects for a user, so that the user can have different audio playing experience.

According to a first aspect, this application provides an audio playing method, applied to an electronic device. The electronic device includes a first part and a second part, the first part and the second part rotate or expand around a central axis of the electronic device, the first part includes one or more first sound generation units, and the second part includes one or more second sound generation units. The method includes:
When a sound effect mode of the electronic device is a first mode, the electronic device receives a first input for playing a first audio.

In response to the first input, the electronic device controls the one or more first sound generation units to play first audio data, and controls the one or more second sound generation units to play second audio data, where the first audio data and the second audio data each include at least a part of audio source data of the first audio.

The electronic device receives a second input.

The electronic device switches the sound effect mode of the electronic device from the first mode to a second mode in response to the second input.

The electronic device receives a third input for playing the first audio.

In response to the third input, the electronic device controls the one or more first sound generation units to play third audio data, and controls the one or more second sound generation units to play fourth audio data, where the third audio data and the fourth audio data each include at least a part of the audio source data of the first audio, and the first audio data is different from the third audio data.

In this way, when being in different sound effect modes, the electronic device may perform different processing on same audio source data to obtain different first audio data and different third audio data, and play different audio data by using the first sound generation unit, to implement different playing effects. In addition, because the sound generation unit of the first part and the sound generation unit of the second part of the electronic device jointly sound, the electronic device can improve consistency between a sound and a picture when displaying a video picture by using the first part, so that a user can perceive that an audio source of the sound and the picture are at a same position. This improves an immersion feeling of the user.

In a possible implementation, channels included in the first audio data are partially/completely different from channels included in the third audio data. In this way, different playing effects can be implemented for data of different channels.

In a possible implementation, when the first mode is any one of a low-frequency enhancement mode, a dialogue enhancement mode, and a surround enhancement mode, at least a part of channels included in the first audio data are different from at least a part of channels included in the second audio data; and/or
when the first mode is a loudness enhancement mode, at least a part of channels of the first audio data are the same as at least a part of channels of the second audio data.

In a possible implementation, the electronic device includes one or more sound effect modes, and the one or more sound effect modes include the first mode and the second mode. Before that the electronic device receives a second input, the method further includes:
The electronic device displays one or more sound effect mode options. The one or more sound effect mode options are in a one-to-one correspondence with the one or more sound effect modes, the one or more sound effect mode options include a first mode option and a second mode option, the first mode option corresponds to the first mode, the second mode option corresponds to the second mode, the first mode option is marked, and the second input is an input for the second mode option.

Setting the sound effect mode of the electronic device to the second mode in response to the second input specifically includes:
The electronic device switches the sound effect mode of the electronic device from the first mode to the second mode in response to the second input, and unmarks the first mode option and marks the second mode option.

In this way, the electronic device may provide different sound effect mode options for the user, so that the user can adjust the sound effect mode of the electronic device, and the electronic device plays an audio in a specified sound effect mode.

In a possible implementation, the first mode option is a low-frequency enhancement mode option, the first mode is the low-frequency enhancement mode, the first audio data includes data of a low-frequency channel, and the second audio data includes data of a left channel and data of a right channel, data of a left surround channel and data of a right surround channel, and/or data of a center channel. In this way, in a low-frequency mode, the electronic device may play the data of the low-frequency channel by using the first sound generation unit, to enhance a low-frequency vibration effect during audio playing.

In a possible implementation, the first mode option is a dialogue enhancement mode option, the first mode is the dialogue enhancement mode, the first audio data includes data of a center channel, and the second audio data includes data of a left channel and data of a right channel, data of a left surround channel and data of a right surround channel, and/or data of a low-frequency channel. In this way, a human voice is highlighted when the electronic device plays an audio, and character lines are highlighted when a video is played.

In a possible implementation, the first mode option is a loudness enhancement mode option, the first mode is the loudness enhancement mode, the first audio data includes data of a left channel and data of a right channel, and the second audio data includes the data of the left channel and the data of the right channel. In this way, clarity of audio data played by the electronic device can be improved.

In a possible implementation, when the electronic device includes one first sound generation unit, the electronic device plays the data of the left channel and the data of the right channel of the first audio data by using the one first sound generation unit.

Alternatively, when the electronic device includes two first sound generation units, the electronic device plays the data of the left channel by using one first sound generation unit, and plays the data of the right channel by using the other first sound generation unit.

Alternatively, if the electronic device includes three or more first sound generation units, the electronic device plays the data of the left channel by using at least one first sound generation unit, plays the data of the right channel by using at least one first sound generation unit, and plays the data of the left channel and the data of the right channel of the second audio data by using at least one first sound generation unit. In this way, based on a quantity of first sound generation units, the first sound generation units may be appropriately used to play data of the channels of the first audio data, and a sound generation unit resource provided by the electronic device can be fully utilized.

In a possible implementation, the first mode option is a surround enhancement mode option, the first mode is the surround enhancement mode, the first audio data includes data of a left surround channel and data of a right surround channel, and the second audio data includes data of a left channel and data of a right channel, data of a center channel, and/or data of a low-frequency channel. In this way, a surround feeling during audio playing can be increased.

In a possible implementation, when the electronic device processes the audio source data, loudness of weak audio data of the audio source data is enhanced. In this way, a weak sound can be highlighted and details can be enhanced. In this way, the user can hear a weak sound when playing a game, and observe a movement of a game character, so that game experience is improved. When watching a movie, the user can hear a clear background sound, for example, a wind sound, or an insect sound. This is more vivid.

In a possible implementation, when the electronic device displays the one or more sound effect mode options, the method further includes:

The electronic device displays a slider bar.

If the first mode option is the loudness enhancement mode option, the low-frequency enhancement mode option, or the dialogue enhancement mode option, when a value of the slider bar is a first value, a volume at which the electronic device plays the first audio data is a third volume, or when a value of the slider bar is a second value, a volume at which the electronic device plays the first audio data is a fourth volume, where the first value is less than the second value, and the third volume is lower than the fourth volume.

If the first mode option is the surround mode option, when a value of the slider bar is a third value, a distance between an analog audio source and the user is a third distance when the electronic device plays the first audio data, or when a value of the slider bar is a fourth value, a distance between an analog audio source and the user is a fourth distance when the electronic device plays the first audio data, where the third value is less than the fourth value, and the third distance is shorter than the fourth distance. In this way, an effect of the sound effect mode may be set by using the slider bar, and the user may adjust the value of the slider bar to select a proper playing effect.

In a possible implementation, the method further includes:
The electronic device receives a fourth input for playing a first video.

In response to the fourth input, the electronic device identifies one or more objects in a video picture of the first video, and identifies audio data of the one or more objects in an audio file of the first video. The one or more objects include a first object.

The electronic device plays audio data of the first object by using a sound generation unit closest to the first object in the one or more first sound generation units and/or the one or more second sound generation units. In this way, the electronic device may play a sound of the first object by using one or more sound generation units closest to the first object, so that the user can feel a position of the first object in the picture by hearing, to enhance the immersion feeling during video playing.

In a possible implementation, a first sound generation unit located at a first position is configured to play a sky sound; and/or
a first sound generation unit located at a second position is configured to play a ground sound, where a distance between the first position and the central axis is greater than a distance between the second position and the central axis; and/or
a first sound generation unit located at a third position is configured to play the data of the left channel, and a first sound generation unit located at a fourth position is configured to play the data of the right channel, where the third position is located on a left side of the first part, and the fourth position is located on a right side of the first part; and/or
a first sound generation unit located at a fifth position is configured to play the data of the left surround channel, and a first sound generation unit located at a sixth position is configured to play the data of the right surround channel, where the third position is located on the left side of the first part, and the fourth position is located on the right side of the first part.

In this way, the electronic device may play data of channels in different orientations by using sound generation units at different positions, to reflect an audio orientation sense.

In a possible implementation, the electronic device is a notebook computer, the first part includes a display of the electronic device, and the second part includes a keyboard and/or a touchpad of the electronic device. In this way, the notebook computer can simultaneously sound by using the sound generation units of the first part and the second part, to enhance an audio playing effect.

In a possible implementation, the first part of the electronic device includes a first housing and a second housing, and the first housing includes the display of the electronic device. The first mode is the surround enhancement mode, and a first sound generation unit located at the first housing is configured to drive the first housing to play the first audio data.

Alternatively, the first mode is the low-frequency enhancement mode, and a first sound generation unit located at the second housing is configured to drive the second housing to play the first audio data.

In this way, the electronic device may drive the first housing or the second housing of the electronic device to sound, so that a sound range is wider, and a sound generation effect is better.

In a possible implementation, the electronic device is a foldable screen device, the first part includes a first screen, the second part includes a second screen, a folding manner of the electronic device is left-right folding, and the electronic device includes a folded state and an unfolded state.

If the electronic device is in the folded state, a sound generation unit that is in the one or more first sound generation units and the one or more second sound generation units and that is located on a first side of the electronic device is configured to play the data of the left channel, and a sound generation unit that is in the one or more first sound generation units and the one or more second sound generation units and that is located on a second side of the electronic device is configured to play the data of the right channel; or a sound generation unit that is in the one or more first sound generation units and the one or more second sound generation units and that is located on a first side of the electronic device is configured to play the sky sound, and a sound generation unit that is in the one or more first sound generation units and the one or more second sound generation units and that is located on a second side of the electronic device is configured to play the ground sound, where the first side is different from the second side.

If the electronic device is in the unfolded state, the one or more first sound generation units are configured to play the data of the left channel, and the one or more second sound generation units are configured to play the data of the right channel; or the one or more first sound generation units are configured to play the data of the left surround channel, and the one or more second sound generation units are configured to play the data of the right surround channel. In this way, when the electronic device is in different folding forms, the electronic device may play data of different channels by using sound generation units at different positions, to implement richer playing effects based on the folding forms of the electronic device.

In a possible implementation, the electronic device is a foldable screen device, the first part includes a first screen, the second part includes a second screen, a folding manner of the electronic device is up-down folding, and the electronic device includes a folded state and an unfolded state.

If the electronic device is in the folded state, the one or more first sound generation units and the one or more second sound generation units play the audio source data.

If the electronic device is in the unfolded state, the one or more first sound generation units are configured to play the data of the left channel, and the one or more second sound generation units are configured to play the data of the right channel; or the one or more first sound generation units are configured to play the sky sound, and the one or more second sound generation units are configured to play the ground sound. In this way, when the electronic device is in different folding forms, the electronic device may play data of different channels by using sound generation units at different positions, to implement richer playing effects based on the folding forms of the electronic device.

In a possible implementation, the sky sound includes one or more of a thunder sound, a sound of a flying object, and the wind sound, and the ground sound includes one or more of a footstep sound, the insect sound, and a rain sound. In this way, the electronic device may enhance a sound of a sky object and a sound of a ground object, to reflect a sense of upper and lower orientation. When raindrops fall on eaves and trees, a sound of raindrops belongs to the sky sound. When raindrops fall on the ground, lake, and the like, a sound of raindrops belongs to the ground sound. The rain sound herein indicates a sound of raindrops falling on the ground.

In a possible implementation, the audio source data includes data of a channel required by the first audio data in the first mode, and a quantity of channels other than the channel of the first audio data in the audio source data is a first quantity. The method further includes:
If the first quantity is less than a quantity of second sound generation units, the electronic device upmixes the audio source data, or copies data of a channel other than the first audio data in the audio source data, to obtain fifth audio data. The fifth audio data includes the data of the channel required by the first audio data, a quantity of channels other than the channel of the first audio data in the fifth audio data is the same as the quantity of second sound generation units, and the second audio data includes data of the channel other than the channel of the first audio data.

If the first quantity is greater than a quantity of second sound generation units, the electronic device downmixes the audio source data, or superimposes data of a part of channels in the audio source data, to obtain sixth audio data. The sixth audio data includes the data of the channel required by the first audio data, a quantity of channels other than the channel of the first audio data in the sixth audio data is the same as the quantity of second sound generation units, and the second audio data includes data of the channel other than the channel of the first audio data.

In this way, the electronic device processes the audio source data based on the quantity of second sound generation units, and fully utilizes the sound generation unit resource of the electronic device, to play the audio data.

According to a second aspect, an embodiment of this application provides an electronic device, including a first part and a second part. The first part of the electronic device includes a display of the electronic device, and the second part of the electronic device includes a keyboard and/or a touchpad of the electronic device. The first part includes one or more first sound generation units, the second part includes one or more second sound generation units, and the electronic device includes one or more processors.

The one or more processors are configured to obtain first audio data and second audio data based on audio source data of a first audio in response to an input for playing the first audio. Both the first audio data and the second audio data include at least a part of the audio source data.

The one or more first sound generation units are configured to play the first audio data.

The one or more second sound generation units are configured to play the second audio data.

In this way, the electronic device may play the first audio by using the first sound generation unit of the first part and the second sound generation unit of the second part, and simultaneously sound by using sound generation units at a plurality of positions, to implement a better audio playing effect and improve an immersion feeling during audio playing.

In a possible implementation, the electronic device is a notebook computer. In this way, the notebook computer may play the first audio by using a sound generation unit located near the display and a sound generation unit located near the keyboard, so that a sound beam of the notebook computer faces a direction of ears of a user, and a sound is clearer. In addition, a position of an audio source obtained by simulation when the notebook computer plays audio data is near the display of the notebook computer, so that a sound and a picture are consistent. In this way, when the notebook computer plays a video, a sound and a picture are synchronized.

In a possible implementation, the electronic device is configured to implement the audio playing method in any possible implementation of the first aspect.

According to a third aspect, an embodiment of this application provides an electronic device, including one or more processors, one or more first sound generation units, one or more second sound generation units, and one or more memories. The one or more memories, the one or more first sound generation units, and the one or more second sound generation units are separately coupled to the one or more processors, the one or more memories are configured to store computer program code, the computer program code includes computer instructions, and when the one or more processors execute the computer instructions, the electronic device is enabled to perform the audio playing method in any possible implementation of the first aspect.

According to a fourth aspect, an embodiment of this application provides a computer storage medium, including computer instructions. When the computer instructions are run on a first electronic device, the first electronic device is enabled to perform the audio playing method in any possible implementation of the first aspect.

According to a fifth aspect, this application provides a chip system. The chip system is applied to a first electronic device, the chip system includes one or more processors, and the processor is configured to invoke computer instructions, so that the first electronic device performs the audio playing method in any possible implementation of the first aspect.

According to a sixth aspect, this application provides a computer program product including instructions. When a computer program is run on a first electronic device, the first electronic device is enabled to perform the audio playing method in any possible implementation of the first aspect.

### BRIEF DESCRIPTION OF DRAWINGS

FIG. 1 is a schematic diagram of a structure of an electronic device according to an embodiment of this application;
FIG. 2A is a schematic diagram of positions of sound generation units of an electronic device according to an embodiment of this application;
FIG. 2B is a schematic diagram of a sound field of an electronic device according to an embodiment of this application;
FIG. 2C is a schematic diagram of another sound field of an electronic device according to an embodiment of this application;
FIG. 3A is a schematic diagram of positions of sound generation units of another electronic device according to an embodiment of this application;
FIG. 3B is a schematic diagram of positions of first-part side sound generation units of an electronic device according to an embodiment of this application;
FIG. 3C is a schematic diagram of a sound field of an electronic device according to an embodiment of this application;
FIG. 3D is a schematic diagram of another sound field of an electronic device according to an embodiment of this application;
FIG. 4 is a schematic flowchart of an audio playing method according to an embodiment of this application;
FIG. 5A and FIG. 5B are a schematic flowchart of processing audio source data by an electronic device according to an embodiment of this application;
FIG. 6A to FIG. 6E are a schematic diagram of a group of interfaces according to an embodiment of this application;
FIG. 7 is a schematic diagram of a first-part side sound generation unit of an electronic device according to an embodiment of this application;
FIG. 8A to FIG. 8D are a schematic diagram of a group of forms of an electronic device according to an embodiment of this application;
FIG. 9 is a schematic diagram of another first-part side sound generation unit of an electronic device according to an embodiment of this application;
FIG. 10A to FIG. 10D are a schematic diagram of another group of forms of an electronic device according to an embodiment of this application;
FIG. 11A to FIG. 11C are a schematic diagram of another group of forms of an electronic device according to an embodiment of this application;
FIG. 12A to FIG. 12C are a schematic diagram of another group of forms of an electronic device according to an embodiment of this application;
FIG. 13 is a schematic diagram of another first-part side sound generation unit of an electronic device according to an embodiment of this application; and
FIG. 14 is a schematic diagram of a hardware structure of an electronic device according to an embodiment of this application.

### DESCRIPTION OF EMBODIMENTS

The following clearly and completely describes the technical solutions in embodiments of this application with reference to the accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

In descriptions of embodiments of this application, it should be noted that, unless otherwise explicitly specified and limited, the terms "installation" and "connection" should be understood in a broad sense. For example, the "connection" may be a detachable connection or a non-detachable connection, or may be a direct connection or an indirect connection through an intermediate medium. The orientation terms mentioned in embodiments of this application, for example, "top", "bottom", "up", "down", "left", "right", "inside", and "outside", are merely directions based on the accompanying drawings. Therefore, the orientation terms are used to better and more clearly describe and understand embodiments of this application, but do not indicate or imply that a specified apparatus or element needs to have a specific orientation and be constructed and operated in a specific orientation. Therefore, this cannot be understood as a limitation on embodiments of this application. "A plurality of" means at least two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a Widget that is displayed on a display of the electronic device.

The following describes an electronic device according to an embodiment of this application.

In a possible implementation, the electronic device is a foldable device, and includes a first part and a second part. There is a central axis between the first part and the second part, and the first part and the second part may rotate (or expand) around the central axis to change a degree of an included angle between the first part and the second part. When degrees of the included angle between the first part and the second part of the electronic device are different, the electronic device may be used in different forms.

In some embodiments, the electronic device is a foldable screen device, the first part of the electronic device includes a first screen of the electronic device, and the second part includes a second screen of the electronic device. The first screen and the second screen may be different parts of a same screen. A folding manner of the electronic device may be left-right folding or up-down folding. When the folding manner of the electronic device is left-right folding, the first part may be located on a left side of the second part. When the folding manner of the electronic device is up-down folding, the first part may be located on an upper side of the second part.

The electronic device may be classified into two types based on a folding manner. One type is a foldable screen that folds outward (which is referred to as an outward foldable screen for short), and the other type is a foldable screen that folds inward (which is referred to as an inward foldable screen for short). After the outward foldable screen is folded, the first screen and the second screen are back to back. After the outward foldable screen is expanded, the first screen and the second screen form a third screen. In this way, when the outward foldable screen is folded, a user can use the first screen or the second screen separately. After the outward foldable screen is expanded, the first screen and the second screen form the third screen with a larger screen area. This can provide a larger screen for the user and improve user experience.

After the inward foldable screen is folded, the first screen and the second screen are face to face. When the inward foldable screen is expanded, the first screen and the second screen form a third screen. In this way, after the inward foldable screen is folded, it is convenient for the user to store and carry, and after the inward foldable screen is expanded, it is convenient for the user to use.

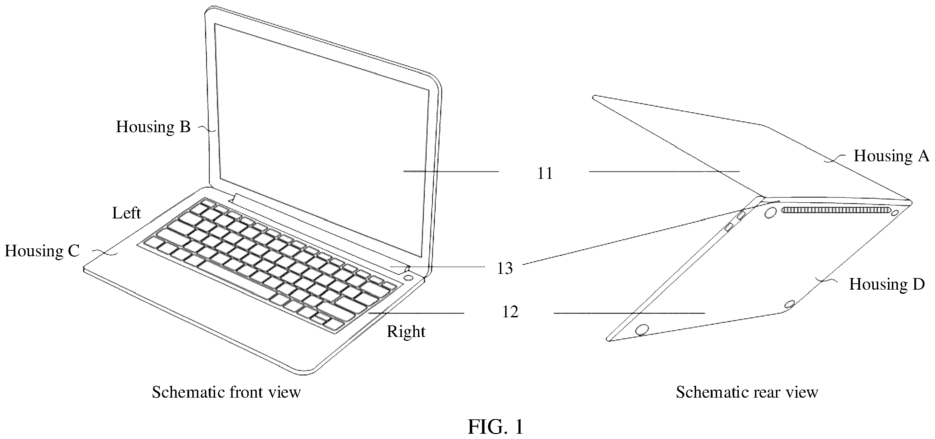

In some other embodiments, the electronic device is a notebook computer or a device in a similar form as the notebook computer. As shown in FIG. 1, a first part of the electronic device is a part 11 shown in FIG. 1, a second part of the electronic device is a part 12 shown in FIG. 1, and a central axis of the electronic device is a central axis 13 shown in FIG. 1. The part 11 and the part 12 of the electronic device may rotate and expand around the central axis 13, to change an angle between the part 11 and the part 12 around the central axis 13. The part 11 includes a housing A and a housing B. The part 12 includes a housing C and a housing D.

Specifically, the part 11 may be a screen part of the electronic device, and the part 12 may be a keyboard part of the electronic device. The screen part of the electronic device may include a display for displaying a user interface. The keyboard part of the electronic device may include but is not limited to a keyboard and/or a touchpad. The user may operate the electronic device by using the touchpad and/or the keyboard, and the electronic device may make a corresponding response according to an instruction entered by the user by using the touchpad and/or the keyboard.

The part 11 of the electronic device includes the housing A and the housing B. The housing A is a part of an outer housing of the electronic device, the housing B is a part of an inner housing of the electronic device, and the display of the electronic device is located at a center of the housing B. The keyboard part of the electronic device includes the housing C and the housing D. The housing D is a part of the outer housing of the electronic device, and the housing C includes the keyboard and/or the touchpad of the electronic device. As shown in a schematic front view in FIG. 1, the housing B and the housing C of the electronic device are adjacent to each other. As shown in a schematic rear view in FIG. 1, the housing A and the housing D of the electronic device are adjacent to each other.

The electronic device may receive an input of the user flipping the screen part, to change an angle between the housing B and the housing C. When the angle between the housing B and the housing C is 0 degrees, the screen part overlaps with the keyboard part, and the housing B and the housing C are blocked. This facilitates storage and carrying by the user. When a value of the angle between the housing B and the housing C is within a specified angle range (for example, 45 degrees to 145 degrees), the user may view displayed content, for example, a video, of the electronic device on the display of the screen part, or may input an instruction to the electronic device by using the keyboard part. In some examples, the value of the angle between the housing B and the housing C of the electronic device may be 360 degrees, the housing A and the housing D of the electronic device overlap, and the user may independently operate the screen part of the electronic device. For example, the screen part may include a touchscreen, and the touchscreen may be configured to receive an input of the user, to trigger the screen part to perform an operation corresponding to the input.

In some examples, the keyboard part and the screen part are not limited to being connected as shown in FIG. 1. The screen part and the keyboard part may be two separate components, the screen part includes a connection structure 15, and the keyboard part includes a connection structure 16. The connection structure 15 of the screen part may be coupled and connected to the connection structure 16 of the keyboard part. It should be noted that the coupling may include but is not limited to an electrical connection, a mechanical coupling, and the like. In embodiments of this application, the words coupling and connection may be considered equivalent when specifically indicating an electrical connection. The electrical connection includes a connection between conducting wires or an indirect connection through another component to implement an interconnection of electrical signals. A specific electrical connection manner is not limited in this embodiment.

In this way, when the screen part is separated from the keyboard part, the user may independently operate the screen part. For example, the screen part may include a touchscreen, and the touchscreen may be configured to receive an input of the user, to trigger the screen part to perform an operation corresponding to the input. When the screen part is connected to the keyboard part, the keyboard part may receive an input of the user, and send the input to the screen part through the connection structure 15 and the connection structure 16, so that the screen part may perform an operation corresponding to the input.

The following uses the electronic device shown in FIG. 1 as an example to describe subsequent embodiments.

In some embodiments, one or more speakers are disposed in the second part of the electronic device, and the electronic device may play an audio by using the one or more speakers. For example, the one or more speakers of the electronic device may push air by vibration to emit a sound wave, and the sound wave may be output from a sound outlet of the electronic device (for example, a sound outlet located on a side of the second part of the electronic device, and a front sound outlet located on an edge that is of the second part and that is adjacent to the central axis) or a gap of the keyboard in the second part, and then reaches ears of the user, so that the user can listen to the audio played by the electronic device.

All or a part of the one or more speakers may be disposed on an inner surface of the housing C, an inner surface of the housing D, a gap between the housing C and the housing D, a joint between the housing C and the housing D (namely, the side of the second part of the electronic device), and the like. A position of the one or more speakers in the second part is not limited in embodiments of this application. The speaker disposed in the second part of the electronic device may be referred to as a second-part side sound generation unit. The second-part side sound generation unit may be a moving coil speaker, a moving iron speaker, a piezoelectric speaker, a micro-electro-mechanical system (micro-electro-mechanical system, MEMS) speaker, a piezoelectric ceramic speaker, a magnetostrictive speaker, or the like.

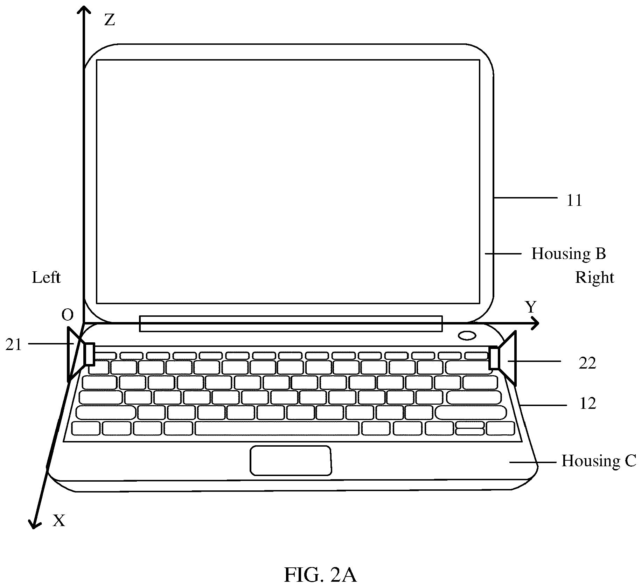

For example, as shown in FIG. 2A, a surface of the housing C in the second part of the electronic device is used as an XOY plane, and a direction that is perpendicular to the XOY plane and that points from the housing D to the housing C is used as a Z axis. An origin point O may be located on a left edge of the central axis, a Y axis may coincide with the central axis and be oriented to the right, and an X axis is perpendicular to the Y axis and points from the point O to an edge that is on the housing C and that is away from the central axis. Herein, the second-part side sound generation unit of the electronic device is disposed on the side of the second part. The second-part side sound generation unit of the electronic device includes a sound generation unit 21 and a sound generation unit 22, the second-part side sound generation unit 21 is located on a left side of the second part, and the second-part side sound generation unit 22 is located on a right side of the second part. In FIG. 2A, the sound generation unit 21 and the sound generation unit 22 each are represented by a horn shape. The horn shape is merely a schematic representation of the sound generation unit, and the horn shape limits neither a shape of the sound generation unit nor a specific position of the sound generation unit. Similarly, the horn in the following drawings limits neither a shape of the sound generation unit nor a specific position of the sound generation unit.

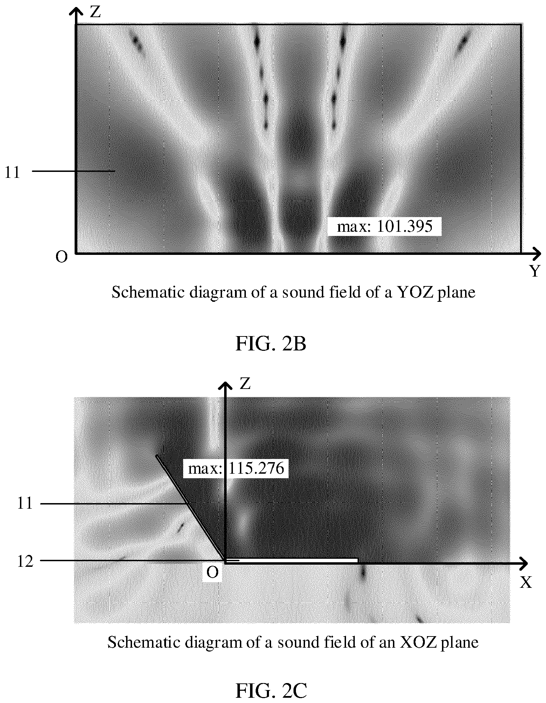

Specifically, when an audio is played, sound field directions of the electronic device shown in FIG. 2A are shown in FIG. 2B and FIG. 2C. FIG. 2B shows a sound pressure distribution of a YOZ plane of the electronic device, and FIG. 2C shows a sound pressure distribution of the XOZ plane of the electronic device. In FIG. 2B and FIG. 2C, sound pressure is stronger at a position with a darker color, and sound pressure is weaker at a position with a lighter color. A position of the second-part side sound generation unit is on the XOY plane. Sound pressure is stronger at a position closer to the XOY plane. Moreover, energy of the sound wave is concentrated around the XOY plane, and a beam direction of a sound wave with strong energy is the same as a Z-axis direction.

It can be learned from sound pressure images shown in FIG. 2B and FIG. 2C that when the electronic device plays an audio by using the second-part side sound generation unit, a sound wave emitted by the second-part side sound generation unit forms an audio sound image near the keyboard part. An overall audio sound image height is limited. As a result, a spatial stereo field cannot be fully restored. As a result, a sound heard by the user is not at the same height as a screen picture seen by the user, resulting in a deviation of sound and picture positions, and affecting audio listening experience.

In addition, most energy of the second-part side sound generation unit is concentrated in the keyboard part. When a volume of an audio played by the electronic device is high, a vibration amplitude of the second-part side sound generation unit is large, which easily causes resonance of a mechanical part like the keyboard, generates noise, and affects an audio playing effect.

When the electronic device generates a sound by using the second-part side sound generation unit, if the user uses the electronic device to play an audio on a non-desktop, because a reflection capability of the non-desktop to a sound wave is weak, audio speaker performance is poorer than audio speaker performance obtained when the user uses the electronic device to play the audio on a desktop. Therefore, that the electronic device uses the second-part side sound generation unit to generate a sound has a high requirement on an environment of the electronic device. The electronic device needs a desktop on which the electronic device is placed to reflect a sound wave, so that the user can also hear reflected audio energy, a sound is clearer, and a playing effect is better.

In embodiments of this application, one or more speakers are disposed in the second part of the electronic device, and the one or more speakers disposed in the second part may be referred to as a second-part side sound generation unit. One or more speakers are also disposed in the first part of the electronic device, and the one or more speakers disposed in the first part may be referred to as a first-part side sound generation unit. The electronic device may play an audio by using both the second-part side sound generation unit and the first-part side sound generation unit.

For example, for a description of the second-part side sound generation unit of the electronic device, refer to the embodiment shown in FIG. 2A. Details are not described herein again. All or a part of the one or more first-part side sound generation units in the electronic device may be disposed on an inner surface of the housing A or the housing B, or the first-part side sound generation units may be disposed at a joint between the housing A and the housing B (a side edge of the screen part). The first-part side sound generation unit may be a speaker with a small volume, for example, a piezoelectric ceramic speaker or a magnetostrictive speaker.

For example, if the first-part side sound generation unit is a piezoelectric ceramic speaker, the first-part side sound generation unit may be disposed on the housing A at the back of the display of the electronic device, and the piezoelectric ceramic speaker may transmit deformation of the piezoelectric ceramic speaker to the display by using a torque action, so that the display vibrates to generate a sound. The piezoelectric ceramic speaker may include a plurality of piezoelectric ceramic elements. When a piezoelectric ceramic element expands and shrinks, the display is bent and deformed, and the entire display forms bending vibration, so that the display can push air and generate a sound.

It should be noted that, that the first-part side sound generation unit is a piezoelectric ceramic speaker is merely an example, and the first-part side sound generation unit may alternatively be a moving coil speaker, a moving iron speaker, a piezoelectric speaker, a MEMS speaker, or the like. This is not limited in embodiments of this application.

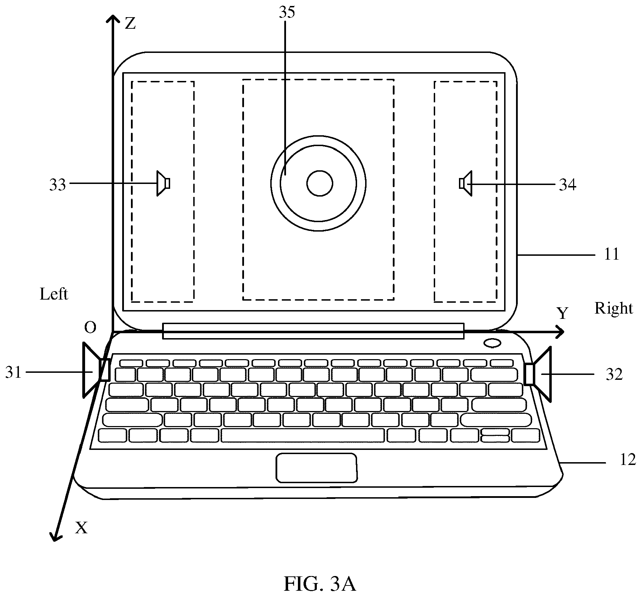

For example, as shown in FIG. 3A, a surface of the housing C in the second part of the electronic device is used as an XOY plane, and a direction that is perpendicular to the XOY plane and that points from the housing D to the housing C is used as a Z axis. An origin point O is located on a left side of the central axis, a Y axis is located on the central axis and oriented to the right, and an X axis is perpendicular to the Y axis and points from the point O to the edge that is on the housing C and that is away from the central axis.

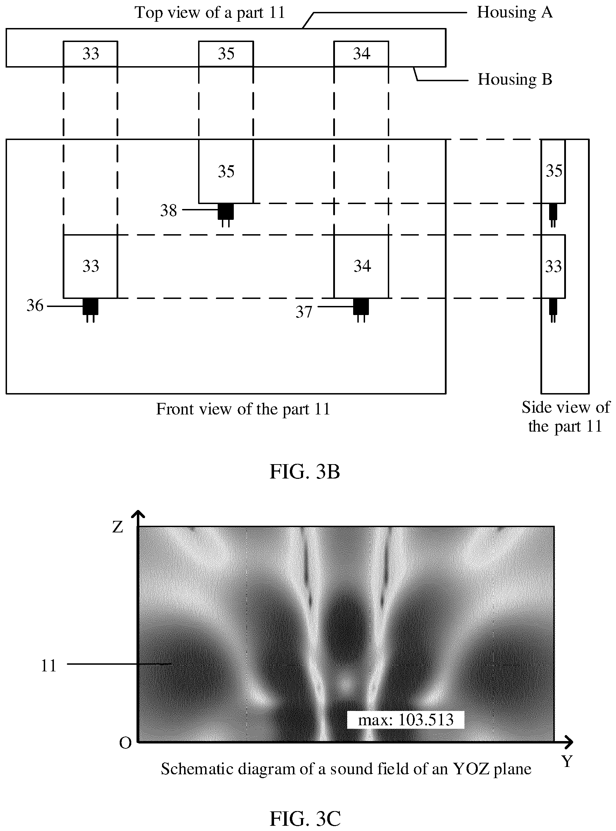

For example, the electronic device includes three first-part side sound generation units and two second-part side sound generation units. The two second-part side sound generation units of the electronic device may be respectively disposed on two opposite sides of the keyboard part. For example, a second-part side sound generation unit 31 is located on the left side of the second part, and a second-part side sound generation unit 32 is located on the right side of the keyboard part. The first-part side sound generation units of the electronic device may be disposed in the middle and two sides of the housing B in the first part. As shown in FIG. 3B, the three first-part side sound generation units are all attached to the inside of the housing B. The three first-part side sound generation units include a first-part side sound generation unit 33, a first-part side sound generation unit 34, and a first-part side sound generation unit 35. The first-part side sound generation unit 35 is located on a vertical central axis of the first part. The first-part side sound generation unit 33 is located on the left side of the vertical central axis of the first part, and the first-part side sound generation unit 34 is located on the right side of the vertical central axis of the first part. A distance between the first-part side sound generation unit 33 and the first-part side sound generation unit 35 is the same as a distance between the first-part side sound generation unit 34 and the first-part side sound generation unit 35.

It should be noted that the three first-part side sound generation units and the two second-part side sound generation units are merely examples, and a quantity and composition of the sound generation units of the electronic device may not be limited to the composition shown in FIG. 3A. For example, the electronic device may include two first-part side sound generation units and two second-part side sound generation units. The two first-part side sound generation units may be respectively located in left and right areas of the first part, and are symmetrical relative to a perpendicular plane of the central axis. The two first-part side sound generation units are at equal distances from the center axis and at equal distances from a center point of the first part. Similarly, the two second-part side sound generation units may be respectively located in left and right areas of the second part, and are symmetrical relative to the perpendicular plane of the central axis. The two second-part side sound generation units are at equal distances from the center axis and at equal distances from a center point of the second part. The electronic device may include more or less first-part side sound generation units and more or less second-part side sound generation units. This is not limited in embodiments of this application.

It may be understood that, when the first-part side sound generation unit (second-part side sound generation unit) of the electronic device is located on a first side (for example, the left side or the right side) of the first part (the second part), to enable the user to hear a balanced sound, another sound generation unit needs to be located at a position that is symmetrical to the sound generation unit relative to the perpendicular plane of the central axis.

It should be further noted that, the position of the first-part side sound generation unit 35 shown in FIG. 3A is merely an example, and is not limited to the position shown in FIG. 3A. The first-part side sound generation unit 35 may be located at another position in the first part. For example, the first-part side sound generation unit 35 may be located near the housing A of the first part. For example, the first-part side sound generation unit 35 may be attached to the inside of the housing A to vibrate the housing A to generate a sound. For another example, the first-part side sound generation unit 35 may be located inside the first part, a direction of the horn faces the housing A, and a sound outlet is disposed at a corresponding position on the housing A. In this way, a sound wave direction of a sound generated by the first-part side sound generation unit 35 points from the housing B to the housing A. In this way, the first-part side sound generation unit 35 may be configured to play a background sound in an audio, so that an audio source of the played background sound is farther away from the user, and a better immersion feeling is brought to the user. The first-part side sound generation unit 35 may be further configured to play a sound generated by an object (for example, a person, an animal, or an object) that is farther away from the user in a video picture, and represent a position relationship of objects by using sounds, to bring better video watching experience to the user.

For another example, the first-part side sound generation unit 35 may be located at the top of a side edge of the first part, so that a sound wave direction of the sound generated by the first-part side sound generation unit 35 faces upward. The first-part side sound generation unit 35 may be configured to play a sky sound in the audio. The sky sound is a sound generated by a specified sky object in the audio. For example, the specified sky object may be a flying object (for example, an airplane, or a bird), or thunder and lightning. In this way, the user can sense, through hearing, height information of the specified sky object in the audio. This increases an immersion feeling of the user in listening to the audio. The first-part side sound generation unit 35 may be further configured to play a sound generated by an object that is at an upper part of the video picture, and represent a position relationship of objects by using sounds, to bring better video watching experience to the user.

In some examples, when the first-part side sound generation unit directly plays audio source data, if signal power of a to-be-played audio is low, a vibration amplitude of the first-part side sound generation unit is small, and sound quality is poor. In this case, the first-part side sound generation unit may be connected to an audio power amplifier chip through a sound generation unit connection line. For example, the sound generation unit connection line may be a sound generation unit connection line 36, a sound generation unit connection line 37, and a sound generation unit connection line 38 shown in FIG. 3B. The sound generation unit connection line 36 may be configured to connect the first-part side sound generation unit 33 and the audio power amplifier chip, the sound generation unit connection line 37 may be configured to connect the first-part side sound generation unit 34 and the audio power amplifier chip, and the sound generation unit connection line 38 may be configured to connect the first-part side sound generation unit 35 and the audio power amplifier chip. It should be noted that FIG. 3B shows only a part of the sound generation unit connection lines, and should not constitute a specific limitation on the sound generation unit connection line. The audio power amplifier chip may amplify an analog audio signal, and then send an amplified analog audio signal to the first-part side sound generation unit, so that the first-part side sound generation unit may vibrate to generate a sound based on the amplified analog audio signal. In this way, power of the amplified analog audio signal is high, and the first-part side sound generation unit is pushed by using the analog audio signal with high power, so that the audio can be played with higher sound quality.

Similarly, the second-part side sound generation unit may also be connected to the audio power amplifier chip through a sound generation unit connection line, and receive an amplified audio signal sent by the audio power amplifier chip.

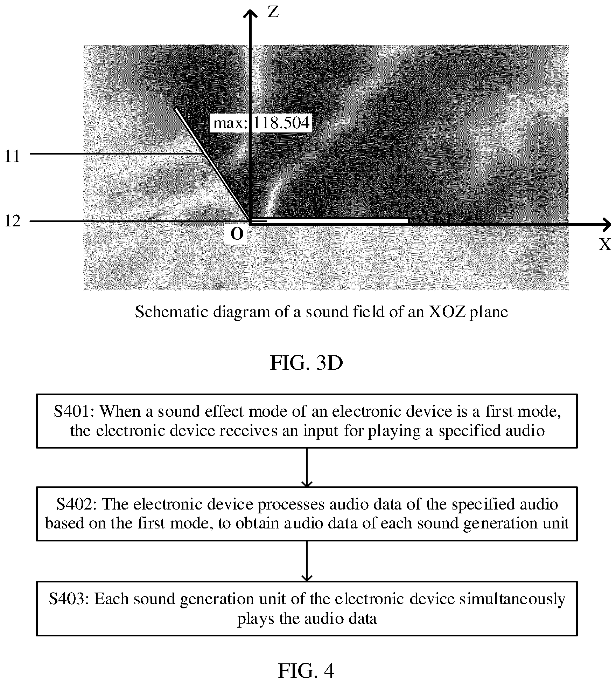

Specifically, when an audio is played, sound field directions of the electronic device shown in FIG. 3A are shown in FIG 3C and FIG. 3D. FIG. 3C shows a sound pressure distribution of the YOZ plane of the electronic device, and FIG. 3D shows a sound pressure distribution of the XOZ plane of the electronic device. In FIG 3C and FIG. 3D, sound pressure is stronger at a position with a darker color, and sound pressure is weaker at a position with a lighter color. Because the second-part side sound generation unit and the first-part side sound generation unit generate a sound together, it can be learned from FIG. 3D that a beam direction of a sound wave with strong energy is a direction of a perpendicular line between the X axis and the Z axis. In this way, because the beam direction of the sound wave is directed towards the perpendicular line between the X axis and the Z axis, and the direction is usually directed towards positions at which ears of the user are located when the user uses the electronic device, the sound can be better transmitted to a vicinity of the ears of the user, to improve audio listening experience of the user.

It can be learned from sound pressure images shown in FIG. 3C and FIG. 3D that, when the electronic device plays an audio by using both the second-part side sound generation unit and the first-part side sound generation unit, a height of an audio image in the Z-axis direction is increased compared with that when the electronic device plays the audio by using only the second-part side sound generation unit. In addition, a sound field in the XOY plane is changed to a vertical 3D sound field in O-XYZ three-dimensional space, so that a wider and higher stereo audio playing effect can be created. In this way, the user feels that the sound and picture are highly consistent when watching a video, and audio experience of a surround feeling of the user is enhanced.

In some examples, as shown in FIG. 2B, a maximum sound pressure value of the electronic device including only the second-part side sound generation unit in the YOZ plane is 101.395 dB. As shown in FIG. 3C, a maximum sound pressure value of the electronic device including the first-part side sound generation unit and the second-part side sound generation unit in the YOZ plane is 103.513 dB. As shown in FIG. 2C, a maximum sound pressure value of the electronic device including only the second-part side sound generation unit in the XOZ plane is 115.276 dB. As shown in FIG. 3D, a maximum sound pressure value of the electronic device including the first-part side sound generation unit and the second-part side sound generation unit in the XOZ plane is 118.504 dB. It can be learned from FIG. 2B, FIG. 2C, FIG. 3C, and FIG. 3D that the maximum sound pressure value of the electronic device including the first-part side sound generation unit and the second-part side sound generation unit is greater than that of the electronic device including only the second-part side sound generation unit. The sound beam is directed towards the ears of the user. This can bring better auditory experience to the user.

In addition, in a same audio effect state, different from a case in which the second-part side sound generation unit separately plays an audio, the first-part side sound generation unit bears a part of the audio playing function, so that a vibration amplitude of the second-part side sound generation unit is reduced, resonance of a mechanical part like the keyboard is not easily caused, and noise generated when the second-part side sound generation unit plays an audio is reduced. In addition, the first-part side sound generation unit does not need the desktop to reflect a sound wave, so that impact of a placement position of the electronic device on an audio playing effect is reduced.

It should be noted that, when the first-part side sound generation unit is attached only to the inside of the housing B, a sound propagation effect in a direction facing the user can be improved, and the immersion feeling of the user in watching a video can be improved. When the first-part side sound generation unit is attached only to the inside of the housing A, the first-part side sound generation unit may drive the housing A to generate a sound. The first-part side sound generation unit may be configured to play a low-frequency audio signal. In this way, because the low-frequency audio signal is not directional, a low-frequency vibration feeling can be improved, an atmosphere feeling during video playing can be enhanced, and an audio timbre can be optimized. In addition, a use effect of the screen is not affected by vibration of the housing B. In addition, low-frequency energy of some speakers on the keyboard side can be replaced, to reduce impact of noise caused by vibration on the keyboard side.

Based on the electronic device including one or more sound generation units, where the one or more sound generation units include one or more second-part side sound generation units and one or more first-part side sound generation units, an embodiment of this application provides an audio playing method. When a sound effect mode of the electronic device is a first mode, the electronic device may receive an input for playing a specified audio, and in response to the input, process audio data (also referred to as audio source data) of the specified audio of the electronic device based on the first mode, to obtain audio data corresponding to a plurality of sound generation units of the electronic device. The plurality of sound generation units of the electronic device simultaneously play the corresponding audio data. In this way, the electronic device can cooperatively play a first audio by using a first-part side sound generation unit and a second-part side sound generation unit. Based on a manner of joint sound generation of the two parts, a surround feeling and an immersion feeling of a sound field of the electronic device are improved, and an audio playing effect is enhanced.

The following describes an audio playing method according to an embodiment of this application.

For example, as shown in FIG. 4, the audio playing method includes the following steps:
S401: When a sound effect mode of an electronic device is a first mode, the electronic device receives an input for playing a specified audio.

The electronic device supports one or more sound effect modes, and the one or more sound effect modes include the first mode. The sound effect mode of the electronic device is the first mode. The first mode may be a default sound effect mode of the electronic device, or a sound effect mode selected by a user.

First, the following uses a plurality of channels in a 5.1 channel as an example to describe a plurality of sound effect modes provided in this embodiment of this application and channel data included in audio data played by each sound generation unit in the plurality of sound effect modes. In this embodiment of this application, a channel is a mutually independent audio signal collected at different spatial positions during sound recording, and a quantity of channels may be understood as a quantity of audio sources during sound recording. The 5.1 channel includes a left channel, a right channel, a left surround channel, a right surround channel, a center channel, and a low-frequency channel. Data of the left channel includes sound data that is in audio source data and that simulates an auditory range of the left ear of the user, and data of the right channel includes sound data that is in the audio source data and that simulates an auditory range of the right ear of the user. Because the auditory range of the left ear intersects the auditory range of the right ear, the data of the left channel is partially the same as the data of the right channel, and the same part of audio data in the data of the left channel and the data of the right channel is referred to as data of the center channel. The data of the center channel includes sound data that is in the audio source data and that simulates a range in which the auditory range of the left ear overlaps the auditory range of the right ear. In some embodiments, the center channel includes a human voice dialogue. Data of the left surround channel may be used to reflect a left ear-side orientation, and the data of the left surround channel may include audio data that is in the data of the left channel and that is different from the data of the center channel. Data of the right surround channel may be used to reflect a right ear-side orientation, and the data of the right surround channel may include audio data that is in the data of the right channel and that is different from the data of the center channel. Data of the low-frequency channel includes audio data whose frequency is lower than a specified frequency value (for example, 150 Hz) in the audio source data. Sound frequency ranges of the left channel, the right channel, the left surround channel, the right surround channel, and the center channel are 20 Hz to 200 kHz. In some examples, the electronic device may filter out, by using a low-pass filter, audio data whose frequency is greater than a specified frequency value from the audio source data, to obtain the data of the low-frequency channel.

In a possible implementation, the sound effect mode supported by the electronic device may include but is not limited to a surround enhancement mode, a low-frequency enhancement mode, a dialogue enhancement mode, and/or a loudness enhancement mode. In the surround enhancement mode, the electronic device plays, by using a first-part side sound generation unit, audio data including the left surround channel and the right surround channel, to enhance a surround feeling of an audio played by the electronic device. In the low-frequency enhancement mode, the electronic device plays, by using the first-part side sound generation unit, audio data including the low-frequency channel, to enhance a rhythm feeling of the audio played by the electronic device. In the dialogue enhancement mode, the electronic device plays, by using the first-part side sound generation unit, audio data including the center channel, to enhance a human voice of the audio played by the electronic device. In the loudness enhancement mode, the electronic device plays, by using the first-part side sound generation unit, audio data including the left channel and the right channel, to enhance loudness of the audio played by the electronic device.

In the low-frequency enhancement mode, the dialogue enhancement mode, or the surround enhancement mode, channels included in audio data (also referred to as first audio data) played by the first-part side sound generation unit of the electronic device are different from channels included in audio data (also referred to as second audio data) played by a second-part side sound generation unit of the electronic device. It may be understood that, because the channels included in the second audio data are different from the channels included in the first audio data, one or more of amplitudes, waveforms, or frequencies of the second audio data and the first audio data are different.

In the loudness enhancement mode, the channels of the second audio data are the same as the channels of the first audio data. Optionally, in the loudness enhancement mode, an amplitude of the second audio data is different from an amplitude of the first audio data.

In some examples, in each sound effect mode, the channels included in the second audio data played by the electronic device and the channels included in the first audio data played by the electronic device are shown in Table 1.

**Table 1**

| Sound effect mode | Channel of the second audio data | Channel of the first audio data | Effect of the sound effect mode |
|---|---|---|---|
| Surround enhancement mode | Left channel, right channel, center channel, and/or low-frequency channel | Left surround channel and right surround channel | Enhance a surround feeling |
| Dialogue enhancement mode | Left channel, right channel, left surround channel, right surround channel, and/or low-frequency channel | Center channel | Enhance a human voice and highlight the human voice |
| Loudness enhancement mode | Left channel and right channel | Left channel and right channel | Enhance loudness |
| Low-frequency enhancement mode | Left channel, right channel, left surround channel, right surround channel, and/or center channel | Low-frequency channel | Enhance a low-frequency vibration feeling |

As shown in Table 1, in the surround enhancement mode, the second audio data obtained based on the audio source data includes data of the left channel, right channel, center channel, and/or low-frequency channel. The first audio data obtained based on the audio source data includes data of the left surround channel and right surround channel. In this way, in the surround enhancement mode, the data of the surround channel may be played by using the first-part side sound generation unit, so that a sound field of the electronic device has a better surround feeling.

In the dialogue enhancement mode, the second audio data obtained based on the audio source data includes the left channel, the right channel, the left surround channel, the right surround channel, and/or the low-frequency channel. The first audio data obtained based on the audio source data includes only the center channel. In this way, the first-part side sound generation unit may be used to increase clarity of a dialogue.

In the loudness enhancement mode, the second audio data obtained based on the audio source data includes the left channel and the right channel. The first audio data obtained based on the audio source data includes the left channel and the right channel. In this way, the first-part side sound generation unit may be used to increase loudness of the played audio.

In the low-frequency enhancement mode, the second audio data obtained based on the audio source data includes the left channel, the right channel, the left surround channel, the right surround channel, and/or the center channel. The first audio data obtained based on the audio source data includes the low-frequency channel. In this way, the electronic device may play a low-frequency rhythm signal, for example, a sound signal of a drum beat, a bass (bass), or a drum set in a specified audio, so that the user can feel power brought by a heavy bass.

It should be noted that, when the electronic device includes only one first-part side sound generation unit, the electronic device supports the low-frequency enhancement mode, the loudness enhancement mode, and/or the dialogue enhancement mode. When the electronic device includes two or more first-part side sound generation units, the electronic device supports the low-frequency enhancement mode, the loudness enhancement mode, the surround enhancement mode, and/or the dialogue enhancement mode.

If the electronic device includes only one first-part side sound generation unit, in the low-frequency enhancement mode, the first-part side sound generation unit may be used to play the data of the low-frequency channel; in the dialogue enhancement mode, the first-part side sound generation unit may be used to play the data of the center channel; and in the loudness enhancement mode, the first-part side sound generation unit may be used to simultaneously play the data of the left channel and the data of the right channel. Specifically, the electronic device may superimpose the data of the left channel and the data of the right channel, and play, by using the first-part side sound generation unit, the data of the left channel and the data of the right channel that are superimposed. Alternatively, the electronic device may downmix the data of the left channel and the data of the right channel to obtain data including only a mono channel, and play the data of the mono channel by using the first-part side sound generation unit. After the electronic device downmixes the audio data, a quantity of channels included in a downmixed audio data is less than a quantity of channels included in the audio data before the downmixing.

The first-part side sound generation unit of the electronic device may be located on a housing A in a first part of the electronic device, or on a housing B in the first part of the electronic device, or in a cavity between the housing A and the housing B in the first part of the electronic device, or at a joint between the housing A and the housing B in the first part of the electronic device. In some examples, the first-part side sound generation unit of the electronic device is located on the housing A in the first part of the electronic device. In this way, in the low-frequency enhancement mode, the electronic device plays the data of the low-frequency channel by using the first-part side sound generation unit. This not only enhances the low-frequency vibration feeling, but also reduces noise caused by a jitter of a second part. In some other examples, the first-part side sound generation unit of the electronic device is located on the housing B in the first part of the electronic device. In this way, in the dialogue enhancement mode, the electronic device plays the data of the center channel by using the first-part side sound generation unit, so that when the electronic device plays a video, an audio source may be located near a display, and the user can feel that a sound is transmitted from a picture. This enhances an immersion feeling during video playing.

If the electronic device includes two first-part side sound generation units, in the low-frequency enhancement mode, the electronic device may play the data of the low-frequency channel by using both the first-part side sound generation units; in the dialogue enhancement mode, the electronic device may play the data of the center channel by using both the first-part side sound generation units; in the loudness enhancement mode, the electronic device plays the data of the left channel by using a first-part side sound generation unit located on the left side of the electronic device, and plays the data of the right channel by using a first-part side sound generation unit located on the right side of the electronic device; and in the surround enhancement mode, the electronic device plays the data of the left surround channel by using the first-part side sound generation unit located on the left side of the electronic device, and plays the data of the right surround channel by using the first-part side sound generation unit located on the right side of the electronic device.

Both the first-part side sound generation units of the electronic device may be located on the housing A in the first part of the electronic device, or on the housing B in the first part of the electronic device, or in the cavity between the housing A and the housing B in the first part of the electronic device, or at the joint between the housing A and the housing B in the first part of the electronic device. It should be noted that, the two first-part side sound generation units are respectively located on left and right sides of the first part, and are symmetrical relative to a perpendicular plane of a central axis.

Similarly, in some examples, the first-part side sound generation unit of the electronic device is located on the housing A in the first part of the electronic device. In some other examples, the first-part side sound generation unit of the electronic device is located on the housing B in the first part of the electronic device.

In the following embodiments, when one sound generation unit is used to play data of a plurality of channels, it may be understood that the sound generation unit plays superimposed data obtained based on the plurality of channels, or plays downmixed data obtained based on the plurality of channels. To reduce repeated descriptions, specific descriptions of playing data of a plurality of channels by using one sound generation unit are not repeatedly explained below.

If the electronic device includes three first-part side sound generation units, in the low-frequency enhancement mode, the electronic device may play the data of the low-frequency channel by using all the first-part side sound generation units; in the dialogue enhancement mode, the electronic device may play the data of the center channel by using all the first-part side sound generation units; in the loudness enhancement mode, the electronic device may play the data of the left channel by using a first-part side sound generation unit on the left side, play the data of the right channel by using a first-part side sound generation unit on the right side, and play the data of the left channel and the data of the right channel by using another first-part side sound generation unit; and in the surround enhancement mode, the electronic device plays the data of the left surround channel by using a first-part side sound generation unit on the left side, plays the data of the right surround channel by using a speaker on the right side, and plays the data of the left surround channel and the data of the right surround channel by using another speaker.

The first-part side sound generation units of the electronic device may be located on the housing A in the first part of the electronic device, or on the housing B in the first part of the electronic device, or in the cavity between the housing A and the housing B in the first part of the electronic device, or at the joint between the housing A and the housing B in the first part of the electronic device. It should be noted that, one first-part side sound generation unit of the electronic device is located in the middle of the first part and is located on the perpendicular plane of the central axis, and the other two first-part side sound generation units of the electronic device are respectively located on left and right sides of the first part, and are symmetrical relative to the perpendicular plane of the central axis.

In some examples, the first-part side sound generation unit of the electronic device is located on the housing A in the first part of the electronic device. In some other examples, the first-part side sound generation unit of the electronic device is located on the housing B in the first part of the electronic device.

In some examples, one first-part side sound generation unit of the electronic device is located on the housing A of the electronic device, and the other two first-part side sound generation units of the electronic device are located on the housing B of the electronic device. In the low-frequency enhancement mode, the electronic device may play the data of the low-frequency channel by using only the first-part side sound generation unit located on the housing A of the electronic device. The electronic device may play the data of the left channel by using the first-part side sound generation unit on the left side of the other two first-part side sound generation units, and play the data of the right channel by using the first-part side sound generation unit on the right side; or plays the data of the left surround channel by using the first-part side sound generation unit on the left side, and plays the data of the right surround channel by using the first-part side sound generation unit on the right side; or plays the audio source data by using the other two first-part side sound generation units; or does not play the audio data by using the two first-part side sound generation units. In this way, in a low-frequency mode, the sound generation unit on the housing B does not play the data of the low-frequency channel, to reduce a vibration amplitude of the housing B.

It should be noted that, that the one first-part side sound generation unit is located on the housing A of the electronic device, and the other two first-part side sound generation units are located on the housing B of the electronic device is merely an example. The one first-part side sound generation unit may be located at any position on the perpendicular plane of the central axis of the first part. Both the other two first-part side sound generation units are located on the housing A in the first part, on the housing B in the first part, in the cavity between the housing A and the housing B, or at the joint between the housing A and the housing B, and the two first-part side sound generation units are symmetrical relative to the perpendicular plane of the central axis.

By analogy, when the electronic device includes more first-part side sound generation units, in the low-frequency enhancement mode, the electronic device may play the data of the low-frequency channel by using all the first-part side sound generation units; in the dialogue enhancement mode, the electronic device plays the data of the center channel by using all the first-part side sound generation units; in the loudness enhancement mode, the electronic device plays the data of the left channel by using one or more first-part side sound generation units on the left side, plays the data of the right channel by using one or more first-part side sound generation units on the right side, and plays the data of the left channel and the data of the right channel by using another first-part side sound generation unit; and in the surround enhancement mode, the electronic device plays the data of the left surround channel by using one or more first-part side sound generation units on the left side, plays the data of the right surround channel by using one or more first-part side sound generation units on the right side, and plays the data of the left surround channel and the data of the right surround channel by using another first-part side sound generation unit.

It should be further noted that, if the electronic device includes only one second-part side sound generation unit, in the low-frequency enhancement mode, the second-part side sound generation unit may be used to play data of a channel other than the data of the low-frequency channel, for example, the second audio data may include data of the left channel and the right channel, the left surround channel and the right surround channel, and/or the center channel; in the dialogue enhancement mode, the second-part side sound generation unit may be used to play data of a channel other than the data of the center channel, for example, the second audio data may include data of the left channel and the right channel, the left surround channel and the right surround channel, and/or the center channel; and in the loudness enhancement mode, the second-part side sound generation unit may be used to simultaneously play the data of the left channel and the data of the right channel. Specifically, the electronic device may superimpose the data of the left channel and the data of the right channel, and play, by using the second-part side sound generation unit, the data of the left channel and the data of the right channel that are superimposed. Alternatively, the electronic device may downmix the data of the left channel and the data of the right channel to obtain data including only a mono channel, and play the data of the mono channel by using the second-part side sound generation unit.

In the following embodiments, when one sound generation unit is used to play data of a plurality of channels, it may be understood that the sound generation unit plays superimposed data obtained based on the plurality of channels, or plays downmixed data obtained based on the plurality of channels. To reduce repeated descriptions, specific descriptions of playing data of a plurality of channels by using one sound generation unit are not repeatedly explained below.

The second-part side sound generation unit may be located on a housing C in the second part of the electronic device, or on a housing D in the second part of the electronic device, or in a cavity between the housing C and the housing D in the second part of the electronic device, or at a joint between the housing C and the housing D in the second part of the electronic device.

If the electronic device includes two second-part side sound generation units, in the low-frequency enhancement mode, the electronic device may play data of a channel other than the data of the low-frequency channel by using the second-part side sound generation units, for example, the second audio data may include data of the left channel and the right channel, the left surround channel and the right surround channel, and/or the center channel. It may be understood that, when the second audio data includes the data of the left channel and the right channel, the electronic device plays the data of the left channel by using a second-part side sound generation unit located on the left side of the electronic device, and plays the data of the right channel by using a second-part side sound generation unit located on the right side of the electronic device. When the second audio data includes the data of the left surround channel and the right surround channel, the electronic device plays the data of the left surround channel by using the second-part side sound generation unit located on the left side of the electronic device, and plays the data of the right surround channel by using the second-part side sound generation unit located on the right side of the electronic device. When the second audio data includes the data of the center channel, the electronic device plays the data of the center channel by using all the second-part side sound generation units.

In the center enhancement mode, the electronic device may play data of a channel other than the data of the center channel by using the second-part side sound generation units, for example, the second audio data may include data of the left channel and the right channel, the left surround channel and the right surround channel, and/or the low-frequency channel. It may be understood that, when the second audio data includes the data of the left channel and the right channel, the electronic device plays the data of the left channel by using the second-part side sound generation unit located on the left side of the electronic device, and plays the data of the right channel by using the second-part side sound generation unit located on the right side of the electronic device. When the second audio data includes the data of the left surround channel and the right surround channel, the electronic device plays the data of the left surround channel by using the second-part side sound generation unit located on the left side of the electronic device, and plays the data of the right surround channel by using the second-part side sound generation unit located on the right side of the electronic device. When the second audio data includes the data of the low-frequency channel, the electronic device plays the data of the low-frequency channel by using all the second-part side sound generation units.

In the loudness enhancement mode, the electronic device plays the data of the left channel by using the second-part side sound generation unit located on the left side of the electronic device, and plays the data of the right channel by using the second-part side sound generation unit located on the right side of the electronic device.

In the surround enhancement mode, the electronic device may play data of a channel other than the data of the left surround channel and the right surround channel by using the second-part side sound generation units, for example, the second audio data may include data of the left channel and the right channel, the low-frequency channel, and/or the center channel. It may be understood that, when the second audio data includes the data of the left channel and the right channel, the electronic device plays the data of the left channel by using the second-part side sound generation unit located on the left side of the electronic device, and plays the data of the right channel by using the second-part side sound generation unit located on the right side of the electronic device. When the second audio data includes the data of the low-frequency channel, the electronic device plays the data of the low-frequency channel by using all the second-part side sound generation units. When the second audio data includes the data of the center channel, the electronic device plays the data of the center channel by using all the second-part side sound generation units.

The second-part side sound generation unit may be located on the housing C in the second part of the electronic device, or on the housing D in the second part of the electronic device, or in the cavity between the housing C and the housing D in the second part of the electronic device, or at the joint between the housing C and the housing D in the second part of the electronic device. It should be noted that, the two second-part side sound generation units of the electronic device are respectively located on left and right sides of the second part, and are symmetrical relative to the perpendicular plane of the central axis.

If the electronic device includes three second-part side sound generation units, in the low-frequency enhancement mode, the electronic device may play data of a channel other than the data of the low-frequency channel by using the second-part side sound generation units, for example, the second audio data may include data of the left channel and the right channel, the left surround channel and the right surround channel, and/or the center channel.

It may be understood that, when the second audio data includes only the data of the left channel and the right channel, the electronic device plays the data of the left channel by using the second-part side sound generation unit located on the left side of the electronic device, and plays the data of the right channel by using the second-part side sound generation unit located on the right side of the electronic device. The electronic device may play the data of the left channel and the data of the right channel by using a second-part side sound generation unit located in the middle of the electronic device, or does not play the audio data by using the second-part side sound generation unit located in the middle of the electronic device.

When the second audio data includes only the data of the left surround channel and the right surround channel, the electronic device plays the data of the left surround channel by using the second-part side sound generation unit located on the left side of the electronic device, and plays the data of the right surround channel by using the second-part side sound generation unit located on the right side of the electronic device. The electronic device may play the data of the left surround channel and the data of the right surround channel by using the second-part side sound generation unit located in the middle of the electronic device, or does not play the audio data by using the second-part side sound generation unit located in the middle of the electronic device.

When the second audio data includes only the data of the center channel, the electronic device plays the data of the center channel by using all the second-part side sound generation units, or plays the data of the center channel by using only the second-part side sound generation unit located in the middle of the electronic device.

When the second audio data includes the data of the left channel, the data of the right channel, and the data of the center channel, the electronic device may play the data of the left channel by using the second-part side sound generation unit located on the left side of the electronic device, play the data of the right channel by using the second-part side sound generation unit located on the right side of the electronic device, and play the data of the center channel by using the second-part side sound generation unit located in the middle of the electronic device. Alternatively, the electronic device plays the data of the left channel by using the second-part side sound generation unit located on the left side of the electronic device, plays the data of the right channel by using the second-part side sound generation unit located on the right side of the electronic device, and plays the data of the left channel, the data of the right channel, and the data of the center channel by using the second-part side sound generation unit located in the middle of the electronic device.

When the second audio data includes the data of the left surround channel, the data of the right surround channel, and the data of the center channel, the electronic device plays the data of the left surround channel by using the second-part side sound generation unit located on the left side of the electronic device, plays the data of the right surround channel by using the second-part side sound generation unit located on the right side of the electronic device, and plays the data of the center channel by using the second-part side sound generation unit located in the middle of the electronic device.

When the second audio data includes the data of the left channel, the data of the right channel, the data of the left surround channel, and the data of the right surround channel, the electronic device plays the data of the left channel and the data of the left surround channel by using the second-part side sound generation unit located on the left side of the electronic device, plays the data of the right channel and the data of the right surround channel by using the second-part side sound generation unit located on the right side of the electronic device, and plays the data of the left channel and the data of the right channel by using the second-part side sound generation unit located in the middle of the electronic device.

When the second audio data includes the data of the left channel, the data of the right channel, the data of the left surround channel, the data of the right surround channel, and the data of the center channel, the electronic device plays the data of the left channel and the data of the left surround channel by using the second-part side sound generation unit located on the left side of the electronic device, plays the data of the right channel and the data of the right surround channel by using the second-part side sound generation unit located on the right side of the electronic device, and plays the data of the center channel by using the second-part side sound generation unit located in the middle of the electronic device.

Similarly, in the dialogue enhancement mode, the electronic device may play data of a channel other than the data of the center channel by using the second-part side sound generation units, for example, the second audio data may include data of the left channel and the right channel, the left surround channel and the right surround channel, and/or the low-frequency channel. In the loudness enhancement mode, the electronic device may play the data of the left channel by using the second-part side sound generation unit on the left side, play the data of the right channel by using the second-part side sound generation unit on the right side, and play the data of the left channel and the data of the right channel by using another second-part side sound generation unit; and In the surround enhancement mode, the electronic device plays data of a channel other than the data of the left surround channel and the right surround channel by using the second-part side sound generation units, for example, the second audio data may include data of the left channel and the right channel, the low-frequency channel, and/or the center channel.

The second-part side sound generation unit may be located on the housing C in the second part of the electronic device, or on the housing D in the second part of the electronic device, or in the cavity between the housing C and the housing D in the second part of the electronic device, or at the joint between the housing C and the housing D in the second part of the electronic device. It should be noted that, one second-part side sound generation unit of the electronic device is located in the middle of the second part and is located on the perpendicular plane of the central axis, and the other two second-part side sound generation units of the electronic device are respectively located on left and right sides of the second part, and are symmetrical relative to the perpendicular plane of the central axis.

By analogy, when the electronic device includes more second-part side sound generation units, in the low-frequency enhancement mode, the electronic device may play data of a channel other than the data of the low-frequency channel by using the second-part side sound generation units; in the dialogue enhancement mode, the electronic device plays data of a channel other than the data of the center channel by using the second-part side sound generation units; in the loudness enhancement mode, the electronic device plays the data of the left channel by using one or more second-part side sound generation units on the left side, plays the data of the right channel by using one or more second-part side sound generation units on the right side, and plays the data of the left channel and the data of the right channel by using one or more second-part side sound generation units in the middle; and in the surround enhancement mode, the electronic device plays data of a channel other than the data of the left surround channel and the right surround channel by using the second-part side sound generation units.

In some embodiments, for channels included in the first audio data in each sound effect mode of the electronic device, refer to descriptions in Table 1. The second audio data of the electronic device may be the audio source data. The second-part side sound generation units of the electronic device may jointly play the audio source data.

In some other embodiments, for channels included in the first audio data in each sound effect mode of the electronic device, refer to descriptions in Table 1. The electronic device may play the specified audio based on compositions of the second-part side sound generation units.

For example, when the second-part side sound generation units of the electronic device support playing of a mono audio, the electronic device may play the audio source data by using the second-part side sound generation unit. When the second-part side sound generation units of the electronic device support playing of a dual-channel audio, the electronic device may play, by using a part of second-part side sound generation units in the second-part side sound generation units, the data of the left channel that is obtained based on the audio source data, and play, by using the other second-part side sound generation units, the data of the right channel that is obtained based on the audio source data. When the second-part side sound generation units of the electronic device support playing of a 5.1-channel audio, the electronic device may play, by using different second-part side sound generation units in the second-part side sound generation units, data of each channel in a 5.1 channel that is obtained based on the audio source data. For example, the second-part side sound generation units are divided into a left channel sound generation unit, a right channel sound generation unit, a left surround channel sound generation unit, a right surround channel sound generation unit, a center channel sound generation unit, and a low-frequency channel sound generation unit. The left channel sound generation unit in the second part is used to play audio data including the left channel, the right channel sound generation unit in the second part is used to play audio data including the right channel, the left surround channel sound generation unit in the second part is used to play audio data including the left surround channel, the right surround channel sound generation unit in the second part is used to play audio data including the right surround channel, the center channel sound generation unit in the second part is used to play audio data including the center channel, the low-frequency channel sound generation unit in the second part is used to play audio data including the low-frequency channel, and so on.

It should be noted that, when the second-part side sound generation units of the electronic device support playing of the mono audio, the dual-channel audio, and a multi-channel audio, the second-part side sound generation units may play the specified audio in a form of an audio with a maximum quantity of channels supported by the second-part side sound generation units, or the second-part side sound generation units may play the specified audio in a form of an audio selected by the user.

In some embodiments, the sound effect mode supported by the electronic device includes an omnipotent enhancement mode, and in the omnipotent enhancement mode, the second audio data obtained based on the audio source data includes the left channel, the right channel, and the center channel. The first audio data obtained based on the audio source data includes the left surround channel, the right surround channel, and the center channel. In this way, in the omnipotent enhancement mode, the audio data played by the first-part side sound generation unit can implement a better surround feeling of the sound field. In addition, in the omnipotent enhancement mode, the first audio data and the second audio data each include the center channel, and the center channel includes a human voice in the audio data, so that the clarity of the dialogue can be increased.

In some embodiments, sound effect modes of the electronic device include an original sound effect mode. In the original sound effect mode, the second-part side sound generation unit and the first-part side sound generation unit of the electronic device jointly play the audio data of the specified audio.

In a possible implementation, the electronic device may further provide an intelligent enhancement mode. When the electronic device does not receive an input for selecting any sound effect mode, the electronic device may set the sound effect mode to the intelligent enhancement mode. The intelligent enhancement mode is one or a combination of the one or more sound effect modes supported by the electronic device. In this way, when the user does not select a sound effect mode, the electronic device may also process a played audio source data in the intelligent enhancement mode, so that the electronic device and another electronic device jointly play a sound.

Specifically, when the sound effect mode supported by the electronic device includes the dialogue enhancement mode, the surround enhancement mode, the loudness enhancement mode, and the low-frequency enhancement mode, the electronic device may determine the intelligent enhancement mode based on whether to play the video. When the electronic device simultaneously plays the video and the audio, the intelligent enhancement mode may be a combination of the surround enhancement mode and the dialogue enhancement mode. That is, the first audio data includes the left surround channel, the right surround channel, and the center channel. When the electronic device plays only the audio, the intelligent enhancement mode may be a combination of the loudness enhancement mode and the low-frequency enhancement mode. That is, the first audio data includes the left surround channel, the right surround channel, and the low-frequency channel.

When the sound effect mode supported by the electronic device is the dialogue enhancement mode, the low-frequency enhancement mode, or the loudness enhancement mode, the electronic device may set the intelligent enhancement mode as a combination of the low-frequency enhancement mode and the loudness enhancement mode.

It should be noted that, because the intelligent enhancement mode is obtained by the electronic device based on the sound effect mode supported by the electronic device, the one or more sound effect modes determined by the electronic device always include the intelligent enhancement mode.

In some embodiments, the data of the left surround channel is the same as the data of the left channel, and the data of the right surround channel is the same as the data of the right channel. When playing the data of the left surround channel and the data of the right surround channel, the electronic device may adjust loudness of playing the data of the left surround channel and the data of the right surround channel, for example, gradually reduce loudness of playing the data of the right surround channel while gradually increasing loudness of playing the data of the left surround channel, or gradually reduce loudness of playing the data of the left surround channel while gradually increasing loudness of playing the data of the right surround channel. In this way, the user may have a feeling that an audio source simulated by the data of the left channel and the data of the right channel moves around the user.

In some embodiments, the electronic device may display sound effect mode options corresponding to the one or more sound effect modes supported by the electronic device. The one or more sound effect mode options include a first mode option, the one or more sound effect modes include the first mode, and the first mode option corresponds to the first mode. When the electronic device displays the one or more sound effect mode options including the first mode option, the electronic device may receive a second input of selecting the first mode option, and determine a sound effect mode of the electronic device. For example, the first mode option is a loudness enhancement mode option, and the first mode corresponding to the first mode option is the loudness enhancement mode. When the loudness enhancement mode option is selected, the electronic device sets the sound effect mode to the loudness enhancement mode.

S402: The electronic device processes the audio data of the specified audio based on the first mode, to obtain audio data of each sound generation unit.

In this embodiment of this application, the audio data of the specified audio may be referred to as the audio source data. When the electronic device plays only the audio, the audio source data is data of the audio. When the electronic device plays the video, the audio source data is audio data of the video, or data of an audio corresponding to the video.

The electronic device may process the audio source data based on the first mode, to obtain the audio data of each sound generation unit.

In a possible implementation, the sound effect mode of the electronic device is the first mode. When the electronic device plays the specified audio, the electronic device may parse an audio file of the specified audio. When parsing the audio file, the electronic device may obtain a channel included in the audio source data. The electronic device may process, based on the first mode, data of each channel included in the audio source data, to obtain audio data required by each sound generation unit in the first mode. In this way, when the sound effect mode is the first mode, the electronic device may obtain, regardless of which channel is included in the audio source data, the audio data required by each sound generation unit of the electronic device.

In some embodiments, when the electronic device determines that the audio source data includes one channel, that is, an audio source is a mono audio source, the electronic device may obtain, based on the audio source data, audio data including two channels (the left channel and the right channel). For example, the electronic device may directly copy the audio source data to obtain two segments of mono data, and use one segment of mono data as the audio data of the left channel and the other segment of mono data as the audio data of the right channel, to obtain the audio source data including the left channel and the right channel. The audio data of the left channel is the same as the audio data of the right channel. Alternatively, the electronic device may obtain two segments of mono audio source data through copying, and then process the two segments of mono audio source data by using a specified algorithm to adjust one or more of a phase difference, amplitudes, and frequencies of the two segments of audio source data, to obtain the audio source data including the left channel and the right channel.

Then, if the sound effect mode of the electronic device is the loudness enhancement mode, the electronic device may use, as the first audio data and the second audio data, the audio data that includes two channels (the left channel and the right channel) and that is obtained based on the audio source data.

If the sound effect mode of the electronic device is the low-frequency enhancement mode, the surround enhancement mode, or the dialogue enhancement mode, the audio data including two channels (the left channel and the right channel) are upmixed, to obtain audio data including three or more channels. An upmixing operation may be used to increase a quantity of channels included in the audio data. In the low-frequency enhancement mode, the electronic device may obtain first audio data including the low-frequency channel, and second audio data including the left channel and the right channel, the left surround channel and the right surround channel, and/or the center channel. In the surround enhancement mode, the electronic device may obtain first audio data including the left surround channel and the right surround channel, and second audio data including the left channel and the right channel, the low-frequency channel, and/or the center channel. In the dialogue enhancement mode, the electronic device may obtain first audio data including the center channel, and second audio data including the left channel and the right channel, the left surround channel and the right surround channel, and/or the low-frequency channel.

When the electronic device determines that the audio source data includes two channels (the left channel and the right channel), that is, the audio source is a dual-channel audio source, if the sound effect mode of the electronic device is the loudness enhancement mode, the electronic device may directly obtain the audio data including the left channel and the right channel.

If the sound effect mode of the electronic device is the low-frequency enhancement mode, the surround enhancement mode, or the dialogue enhancement mode, the electronic device may upmix the audio data including two channels (the left channel and the right channel), to obtain audio data including three or more channels. In the low-frequency enhancement mode, the electronic device may obtain first audio data including the low-frequency channel, and second audio data including the left channel and the right channel, the left surround channel and the right surround channel, and/or the center channel. In the surround enhancement mode, the electronic device may obtain first audio data including the left surround channel and the right surround channel, and second audio data including the left channel and the right channel, the low-frequency channel, and/or the center channel. In the dialogue enhancement mode, the electronic device may obtain first audio data including the center channel, and second audio data including the left channel and the right channel, the left surround channel and the right surround channel, and/or the low-frequency channel.

When the electronic device determines that the audio source data includes three or more channels (where the three or more channels include the left channel and the right channel), that is, the audio source is a multi-channel audio source, if the sound effect mode of the electronic device is the loudness enhancement mode, the electronic device may directly obtain the first audio data and the second audio data that include the left channel and the right channel. Alternatively, the electronic device may downmix the audio source data to obtain audio source data including only the left channel and the right channel, and use downmixed audio source data as the first audio data and the second audio data. A downmixing operation may be used to reduce a quantity of channels included in the audio data.

If the sound effect mode of the electronic device is the low-frequency enhancement mode, and the audio source data includes the data of the low-frequency channel, the electronic device may use the data of the low-frequency channel as the first audio data, and use data of another channel of the audio source data as the second audio data.

Alternatively, the electronic device may upmix the audio source data to obtain audio source data including more channels, use data of the low-frequency channel of upmixed audio source data as the first audio data, and use data of another channel of the upmixed audio source data as the second audio data. In this way, when a quantity of second-part side sound generation units of the electronic device is large, the second-part side sound generation units of the electronic device can be used to play data of more channels.

If the audio source data does not include the data of the low-frequency channel, the electronic device may upmix the audio source data to obtain audio source data including the low-frequency channel, where a quantity of channels of the upmixed audio source data is greater than a quantity of channels of the audio source data before the upmixing. The electronic device may use the data of the low-frequency channel as the first audio data, and use data of another channel of the audio source data as the second audio data.

Similarly, if the sound effect mode of the electronic device is the dialogue enhancement mode, and the audio source data includes the data of the center channel, the electronic device may use the data of the center channel as the first audio data, and use data of another channel of the audio source data as the second audio data.

Alternatively, the electronic device may upmix the audio source data to obtain audio source data including more channels, use data of the center channel of upmixed audio source data as the first audio data, and use data of another channel of the upmixed audio source data as the second audio data. In this way, when a quantity of second-part side sound generation units of the electronic device is large, the second-part side sound generation units of the electronic device can play data of more channels.

If the audio source data does not include the data of the center channel, the electronic device may upmix the audio source data to obtain audio source data including the center channel, where a quantity of channels of the upmixed audio source data is greater than a quantity of channels of the audio source data before the upmixing. The electronic device may use the data of the center channel as the first audio data, and use data of another channel of the audio source data as the second audio data.

If the sound effect mode of the electronic device is the dialogue enhancement mode, and the audio source data includes the data of the left surround channel and the right surround channel, the electronic device may use the data of the left surround channel and the right surround channel as the first audio data, and use data of another channel of the audio source data as the second audio data.

Alternatively, the electronic device may upmix the audio source data to obtain audio source data including more channels, use data of the left surround channel and the right surround channel of upmixed audio source data as the first audio data, and use data of another channel of the upmixed audio source data as the second audio data. In this way, when a quantity of second-part side sound generation units of the electronic device is large, the second-part side sound generation units of the electronic device can be used to play data of more channels.

If the audio source data does not include the data of the left surround channel and the right surround channel, the electronic device may upmix the audio source data to obtain audio source data including the left surround channel and the right surround channel, where a quantity of channels of the upmixed audio source data is greater than a quantity of channels of the audio source data before the upmixing. The electronic device may use the data of the left surround channel and the right surround channel as the first audio data, and use data of another channel of the audio source data as the second audio data.

It should be noted that, when the quantity of second-part side sound generation units of the electronic device is less than a quantity of other channels of the audio source data, the electronic device may play data of a plurality of channels by using one second-part side sound generation unit, or downmix data of the other channels of the audio source data, to obtain second audio data whose channel quantity is less than or equal to the quantity of second-part side sound generation units.

In some other embodiments, the electronic device may use the audio source data as the second audio data.

In some examples, the electronic device may determine, based on the quantity of second-part side sound generation units, whether to upmix or downmix audio source data including three or more channels.

Specifically, when the audio source data includes data of a channel required by the first audio data in the first mode, and the quantity of other channels of the audio source data is less than the quantity of second-part side sound generation units, the electronic device may upmix the audio source data, or copy data of a part of channels, to obtain audio source data whose quantity of other channels is the same as the quantity of second-part side sound generation units; and use the second-part side sound generation units to play data of the other channels. Alternatively, a plurality of second-part side sound generation units are used to play data of a same channel, or the electronic device may upmix the audio source data, to obtain audio source data whose quantity of other channels is greater than the quantity of second-part side sound generation units.

The electronic device may not upmix or downmix the audio source data when the quantity of other channels of the audio source data is equal to the quantity of second-part side sound generation units.

When the quantity of other channels of the audio source data is greater than the quantity of second-part side sound generation units, the electronic device may play data of a plurality of channels by using one second-part side sound generation unit, or downmix data of the other channels of the audio source data, or superimpose data of a part of channels, to obtain second audio data whose channel quantity is less than or equal to the quantity of second-part side sound generation units.

It should be noted that, when the audio source data does not include the data of the channel required by the first audio data in the first mode, the electronic device definitely upmixes the audio source data, to obtain audio source data including the channel required by the first audio data in the first mode. Then, the electronic device may determine, based on the quantity of second-part side sound generation units, whether to further upmix or downmix the audio source data.

It should be further noted that, herein, the quantity of other channels of the audio source data is used as an example of a determining criterion, or a quantity of all channels of the audio source data may be used as a determining criterion. This is not limited in embodiments of this application.

Finally, it should be noted that for descriptions of playing audio data by the electronic device in each sound effect mode, refer to the embodiment shown in Table 1. Details are not described herein again.

In some other examples, the electronic device may determine, based on a quantity of sound generation units of the electronic device, whether to upmix or downmix the audio source data including three or more channels.

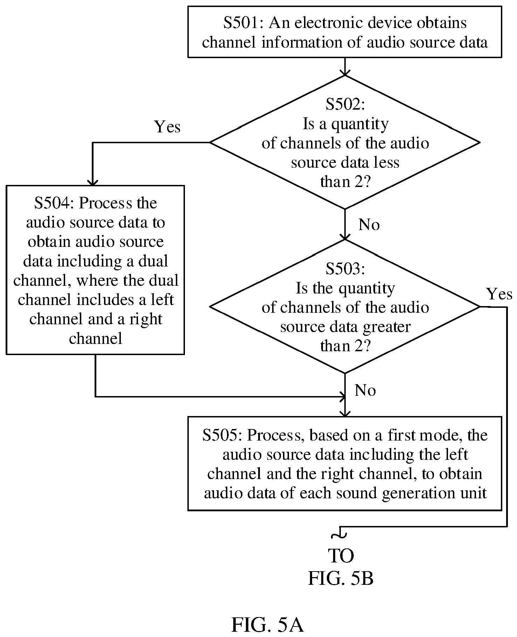

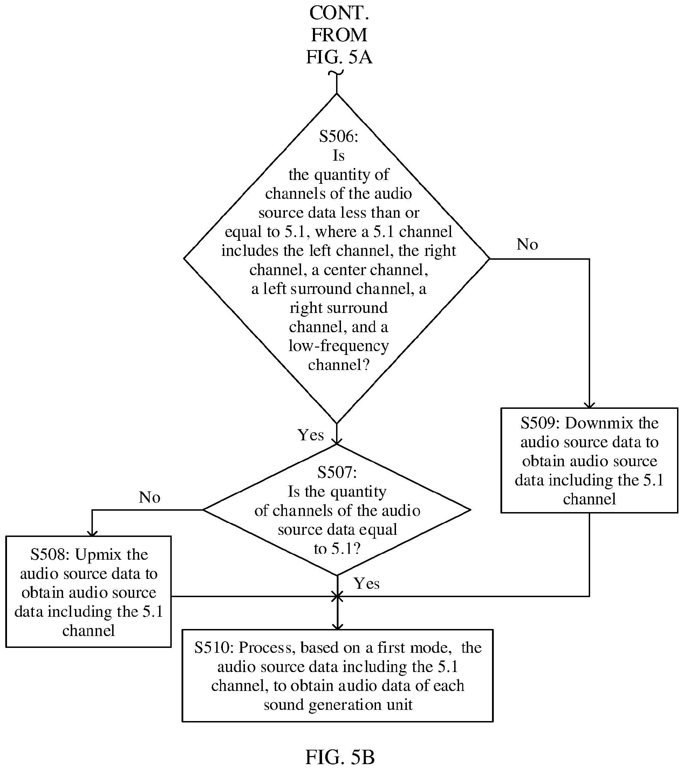

In some examples, in the low-frequency enhancement mode, the surround enhancement mode, and the dialogue enhancement mode, the audio source data is upmixed to obtain audio source data including a 5.1 channel (the left channel, the right channel, the left surround channel, the right surround channel, the low-frequency channel, and the center channel), to explain in detail that the electronic device obtains audio data of each sound generation unit based on the first mode. For example, a process in which the electronic device obtains the audio data of each sound generation unit based on the first mode is shown in FIG. 5A and FIG. 5B.

S501: The electronic device obtains channel information of audio source data.

The electronic device obtains channels included in the audio source data. When decoding an audio file based on a decoding format of the audio file of a specified audio, the electronic device may obtain the channels included in the audio source data. It may be understood that, when obtaining the channels included in the audio source data, the electronic device may obtain a quantity of channels included in the audio source data.

S502: Is the quantity of channels of the audio source data less than 2?

The electronic device determines whether the quantity of channels of the audio source data is less than 2. When the electronic device determines that the quantity of channels of the audio source data is less than 2, step S504 is performed. When the electronic device determines that the quantity of channels of the audio source data is greater than or equal to 2, step S503 is performed.

S503: Is the quantity of channels of the audio source data greater than 2?

The electronic device determines whether the quantity of channels of the audio source data is greater than 2. When the electronic device determines that the quantity of channels of the audio source data is less than or equal to 2, step S505 may be performed. When the electronic device determines that the quantity of channels of the audio source data is greater than 2, step S506 may be performed.

S504: The electronic device processes the audio source data to obtain audio source data including a dual channel, where the dual channel includes the left channel and the right channel.

The electronic device determines that the audio source data is mono audio source data. The electronic device may copy the mono audio source data to obtain the dual-channel audio source data.

In some examples, the electronic device may directly copy the mono audio source data to obtain two segments of mono audio source data, and use one segment of mono audio source data as audio data of the left channel and the other segment of mono data as audio data of the right channel, to obtain the audio source data including the left channel and the right channel. The audio data of the left channel is the same as the audio data of the right channel. Alternatively, the electronic device may obtain two segments of mono audio source data through copying, and then process the two segments of mono audio source data by using a specified algorithm to adjust one or more of a phase difference, amplitudes, and frequencies of the two segments of audio source data, to obtain the audio source data including the left channel and the right channel.

S505: The electronic device processes, based on the first mode, the audio source data including the left channel and the right channel, to obtain the audio data of each sound generation unit.

If the first mode is the surround enhancement mode, the electronic device may process the dual-channel audio source data by using a related algorithm to obtain first audio data including the left surround channel and the right surround channel. For example, when the electronic device includes the sound generation units shown in FIG. 3A, the electronic device may play data of the left surround channel by using the first-part side sound generation unit 33, play data of the right surround channel by using the first-part side sound generation unit 34, play data of the left channel by using the second-part side sound generation unit 31, and play data of the right channel by using the second-part side sound generation unit 32. Because the electronic device includes the first-part side sound generation unit 35, the electronic device may control the first-part side sound generation unit 35 to play the data of the left surround channel and the right surround channel, or does not play the audio data by using the first-part side sound generation unit 35.

Optionally, the electronic device may play the audio source data by using the first-part side sound generation unit 35.

If the first mode is the low-frequency enhancement mode, the electronic device may extract data of the low-frequency channel in the dual-channel audio source data, to obtain first audio data including the low-frequency channel. For example, when the electronic device includes the sound generation units shown in FIG. 3A, the electronic device may play the data of the low-frequency channel by using the first-part side sound generation unit 33, the first-part side sound generation unit 34, and the first-part side sound generation unit 35, play the data of the left channel by using the second-part side sound generation unit 31, and play the data of the right channel by using the second-part side sound generation unit 32.

If the first mode is the dialogue enhancement mode, the electronic device may process the dual-channel audio source data by using a related algorithm, and extract data of the center channel in the dual-channel audio source data, to obtain first audio data including the center channel. For example, when the electronic device includes the sound generation units shown in FIG. 3A, the electronic device may play the data of the center channel by using the first-part side sound generation unit 33, the first-part side sound generation unit 34, and the first-part side sound generation unit 35, play the data of the left channel by using the second-part side sound generation unit 31, and play the data of the right channel by using the second-part side sound generation unit 32.

If the first mode is the loudness enhancement mode, the electronic device may use the dual-channel audio source data as the first audio data and the second audio data. For example, when the electronic device includes the sound generation units shown in FIG. 3A, the electronic device may play the data of the left channel by using the first-part side sound generation unit 33, play the data of the right channel by using the first-part side sound generation unit 34, play the data of the left channel by using the second-part side sound generation unit 31, and play the data of the right channel by using the second-part side sound generation unit 32. Because the electronic device includes the first-part side sound generation unit 35, the electronic device may control the first-part side sound generation unit 35 to play the data of the left channel and the right channel, or does not play the audio data by using the first-part side sound generation unit 35.

Optionally, if the first mode is the low-frequency enhancement mode, the dialogue enhancement mode, or the surround enhancement mode, the electronic device may upmix the dual-channel audio source data to obtain audio source data including a 5.1 channel, and then obtain the first audio data and the second audio data. For details, refer to step S508 and step S510.

It should be noted that, in any audio mode, the electronic device may use mono data or dual-channel data as the second audio data, or the electronic device may process the mono data or the dual-channel data to obtain the second audio data including one or more channels.

S506: Is the quantity of channels of the audio source data less than or equal to 5.1, where the 5.1 channel includes the left channel, the right channel, the center channel, the left surround channel, the right surround channel, and the low-frequency channel?

The electronic device may determine whether the quantity of channels of the audio source data is less than 5.1. When the electronic device determines that the quantity of channels of the audio source data is less than or equal to 5.1, step S507 may be performed. When the electronic device determines that the quantity of channels of the audio source data is greater than 5.1, step S509 may be performed.

That the quantity of channels is less than 5.1 may be understood as that the quantity of channels included in the audio source data is less than the quantity of channels included in the 5.1 channel. For example, when the channels of the audio source data are a 4 channel, a 4.1 channel, a 3 channel, a 3.1 channel, or a 2.1 channel, the quantity of channels is less than 5.1. The 4 channel may be understood as that the audio source data includes the left channel, the right channel, the left surround channel, and the right surround channel; the 4.1 channel may be understood as that the audio source data includes the left channel, the right channel, the low-frequency channel, the left surround channel, and the right surround channel; and so on.

Similarly, that the quantity of channels is greater than 5.1 may be understood as that the quantity of channels included in the audio source data is greater than the quantity of channels included in the 5.1 channel. For example, when the channels of the audio source data are a 7.1 channel or a 10.1 channel, the quantity of channels is greater than 5.1. The 7.1 channel may be understood as that the audio source data includes the left channel, the right channel, a front left surround channel, a front right surround channel, a rear left surround channel, a rear right surround channel, the center channel, and the low-frequency channel.

S507: Is the quantity of channels of the audio source data equal to 5.1?

The electronic device may determine whether the quantity of channels of the audio source data is equal to 5.1. When the electronic device determines that the quantity of channels of the audio source data is equal to 5.1, step S510 may be performed. When the electronic device determines that the quantity of channels of the audio source data is not equal to 5.1, step S508 may be performed.

S508: Upmix the audio source data to obtain audio source data including the 5.1 channel.

If the electronic device determines that the quantity of channels of the audio source data is less than 5.1, the audio source data may be upmixed by using a specified upmixing algorithm to obtain the audio source data of the 5.1 channel.

S509: Downmix the audio source data to obtain audio source data including the 5.1 channel.

If the electronic device determines that the quantity of channels of the audio source data is greater than 5.1, the audio source data may be downmixed by using a specified downmixing algorithm to obtain the audio source data of the 5.1 channel.

S510: The electronic device processes, based on the first mode, the audio source data of the 5.1 channel, to obtain the audio data of each sound generation unit.

If the first mode is the surround enhancement mode, the electronic device may extract the data of the left surround channel and the data of the right surround channel from the audio source data of the 5.1 channel, to obtain the first audio data. For example, when the electronic device includes the sound generation units shown in FIG. 3A, the electronic device may play the data of the left surround channel by using the first-part side sound generation unit 33, play the data of the right surround channel by using the first-part side sound generation unit 34, play the data of the left channel by using the second-part side sound generation unit 31, and play the data of the right channel by using the second-part side sound generation unit 32. Because the electronic device includes the first-part side sound generation unit 35, the electronic device may control the first-part side sound generation unit 35 to play the data of the low-frequency channel and/or the center channel, or does not play the audio data by using the first-part side sound generation unit 35. Optionally, the electronic device may further play the data of the low-frequency channel and/or the center channel by using the second-part side sound generation unit 31 and the second-part side sound generation unit 32. Optionally, if unprocessed audio source data includes the left surround channel, the right surround channel, and another channel, the electronic device may directly extract data of a corresponding channel of the audio source data to obtain the second audio data and the first audio data.

If the first mode is the low-frequency enhancement mode, the electronic device may extract the data of the low-frequency channel in the processed audio source data, to obtain the first audio data including the low-frequency channel. For example, when the electronic device includes the sound generation units shown in FIG. 3A, the electronic device may play the data of the low-frequency channel by using the first-part side sound generation unit 33, the first-part side sound generation unit 34, and the first-part side sound generation unit 35, play the data of the left channel by using the second-part side sound generation unit 31, and play the data of the right channel by using the second-part side sound generation unit 32; and/or play the data of the left surround channel by using the second-part side sound generation unit 31, and play the data of the right surround channel by using the second-part side sound generation unit 32; and/or play the data of the center channel by using the second-part side sound generation unit 31 and the second-part side sound generation unit 32. Optionally, if the unprocessed audio source data includes the low-frequency channel and another channel, the electronic device may directly extract data of a corresponding channel of the audio source data to obtain the second audio data and the first audio data.

If the first mode is the dialogue enhancement mode, the electronic device may further extract the data of the center channel in the processed audio source data, to obtain the first audio data including the center channel. For example, when the electronic device includes the sound generation units shown in FIG. 3A, the electronic device may play the data of the center channel by using the first-part side sound generation unit 33, the first-part side sound generation unit 34, and the first-part side sound generation unit 35, play the data of the left channel by using the second-part side sound generation unit 31, and play the data of the right channel by using the second-part side sound generation unit 32; and/or play the data of the left surround channel by using the second-part side sound generation unit 31, and play the data of the right surround channel by using the second-part side sound generation unit 32; and/or play the data of the low-frequency channel by using the second-part side sound generation unit 31 and the second-part side sound generation unit 32. Optionally, if the unprocessed audio source data includes the center channel and another channel, the second-part side sound generation unit may be directly used to extract data of a corresponding channel of the audio source data to obtain the second audio data and the first audio data.

If the first mode is the loudness enhancement mode, the electronic device may process the audio source data of the 5.1 channel by using a related downmixing algorithm, and obtain, through downmixing, audio source data including only the left channel and the right channel. The electronic device may use the processed audio source data as the second audio data and the first audio data. For example, when the electronic device includes the sound generation units shown in FIG. 3A, the electronic device may play the data of the left channel by using the first-part side sound generation unit 33, play the data of the right channel by using the first-part side sound generation unit 34, play the data of the left channel by using the second-part side sound generation unit 31, and play the data of the right channel by using the second-part side sound generation unit 32. Because the electronic device includes the first-part side sound generation unit 35, the electronic device may control the first-part side sound generation unit 35 to play the data of the left channel and the right channel, or does not play the audio data by using the first-part side sound generation unit 35. Optionally, if the unprocessed audio source data includes the left channel and the right channel, the second-part side sound generation unit may be directly used to extract data of a corresponding channel of the audio source data to obtain the second audio data and the first audio data.

Optionally, in any audio mode, the electronic device may use, as the second audio data, the audio source data, 5.1-channel data, or data of a channel other than a channel of the first audio data in the 5.1-channel data, or the electronic device may process the audio source data or the 5.1-channel data, to obtain the second audio data including one or more channels.

In some embodiments, the electronic device may process the audio source data based on all supported sound effect modes, to obtain data of all channels of all the sound effect modes. The electronic device may play, based on the current sound effect mode, data of a corresponding channel by using the first-part side sound generation unit and the second-part side sound generation unit. In this way, when the sound effect mode of the electronic device changes, the electronic device does not need to process the audio source data based on a modified sound effect mode, and the electronic device may directly play audio data corresponding to the modified sound effect mode.

For example, if the sound effect mode supported by the electronic device includes the surround enhancement mode, the dialogue enhancement mode, the loudness enhancement mode, and the low-frequency enhancement mode, the electronic device processes the audio source data to obtain the data of the left channel, the data of the right channel, the data of the left surround channel, the data of the right surround channel, the data of the center channel, and the data of the low-frequency channel. When the electronic device is in the surround enhancement mode, the electronic device plays the data of the left surround channel and the data of the right surround channel by using the first-part side sound generation units. When the electronic device is in the low-frequency enhancement mode, the electronic device plays the data of the low-frequency channel by using the first-part side sound generation units.

It should be noted that the audio data of each sound generation unit includes at least a part of the audio source data. The at least part of the audio source data includes a part of the audio source data and all of the audio source data. The part of the audio source data may be data of a part of channels and/or data of a part of frequency bands in the audio source data. It may be understood that the part herein includes not only a part, but also all.

It should be noted that, not limited to the embodiment shown in FIG. 5A and FIG. 5B, the electronic device may alternatively directly extract, from the audio source data, the data of the channel required by each sound generation unit in the sound effect mode. For example, in the loudness enhancement mode, the electronic device may process the audio source data by using a specified algorithm, to obtain the data of the left channel, the data of the right channel, and the like. This is not limited in embodiments of this application.

S403: Each sound generation unit of the electronic device simultaneously plays the audio data.

After obtaining the audio data of each sound generation unit, the electronic device may play respective audio data by using all the sound generation units.

Specifically, the electronic device may process the audio source data by using a specified algorithm (for example, a multi-channel algorithm shown in FIG. 5A and FIG. 5B), and send, to an audio driver, the audio data of each sound generation unit obtained by processing the audio source data. The audio driver may convert audio data in a digital signal mode into audio data in an analog signal mode, and then send the audio data in the analog signal mode to an audio power amplifier chip of each sound generation unit. The audio power amplifier chip of each sound generation unit may amplify the audio data in the analog signal mode, and play the amplified audio data in the analog signal mode by using each sound generation unit. In some examples, the audio driver may send the audio data to the audio power amplifier chip by using an inter-integrated circuit built-in audio bus (inter-IC sound, I2S).

It should be noted that one sound generation unit may include one or more speakers. One sound generation unit may be controlled by one audio driver, or a plurality of sound generation units may be controlled by one audio driver. This is not limited in embodiments of this application.

It should be noted that, in a process in which the electronic device plays the specified audio, the electronic device may receive an input that the user selects a second sound effect mode; in response to the input, process audio data of the specified audio based on the second sound effect mode, to obtain audio data played by each sound generation unit of the electronic device; and control the plurality of sound generation units to simultaneously play the audio data of each sound generation unit, to implement playing of the specified audio.

In this way, the electronic device obtains audio data of different sound generation units by using the multi-channel algorithm, and in combination with a joint sound generation combination manner of sound generation units (for example, the first-part side sound generation unit and the second-part side sound generation unit) at different positions, amplify the audio data by using the audio power amplifier chip and then independently transmit the audio data to each sound generation unit. This can significantly improve the surround feeling and immersion feeling of the sound field of the audio played by the electronic device.

In some embodiments, after obtaining the first audio data, the electronic device may further perform an audio processing operation on the first audio data, and then play processed first audio data. For example, the audio processing operation may be adjusting loudness of the first audio data.

In some examples, the electronic device may identify small-signal audio in the first audio data based on an amplitude of the first audio data, to improve loudness of the small-signal audio. The small-signal audio is an audio signal whose loudness is within a range of -35 dB or below in the first audio data. In this way, because the small-signal audio has small loudness and is not easy to be perceived by a human ear, if the loudness of the small-signal audio is improved, the user can listen to the small-signal audio more clearly, and the user can perceive more audio details. For example, if the first audio data is audio data of a game application, the small-signal audio may be a sound that is of a game character and that causes an environment change in a game scenario (for example, a rustling sound of the game character passing through the grass, a footstep sound of the game character, or a sound of a passing car). The electronic device may increase a volume of the small-signal audio, to enhance an immersion feeling of the game, and improve game experience of the user. For another example, if the first audio data is audio data provided by a video application, the small-signal audio may be an ambient sound (for example, an insect sound, a bird sound, or a wind sound) in a video. In a preferred solution of this application, the electronic device may perform the audio processing operation on the first audio data in the loudness enhancement mode. It should be noted that audio data other than the small-signal audio in the first audio data does not change.

In some embodiments, when playing a video, the electronic device may identify positions of a plurality of objects (for example, a person, an animal, or an article) in a video picture by using a video identification algorithm, and may extract sound data of an object at the position from audio source data of the video. The electronic device may play a sound of the object by using one or more sound generation units closest to the object in the video picture. In this way, sound generation units at different positions may be used to play sounds of different objects in the video picture, to enhance an immersion feeling of the video.

In some examples, the electronic device may obtain, based on the position of the object in the video picture and the sound data of the object, first audio data including sound data of one or more objects farther away from the display in the video picture, and obtain second audio data including human voice data (that is, the data of the center channel) of one or more objects closer to the display in the video picture. In this way, the electronic device plays a human voice of an object farther away from the display by using the first-part side sound generation unit, and plays a human voice of an object closer to the display by using the second-part side sound generation unit, so that the user can feel the human voices at different positions, to improve an immersion feeling of the user in watching the video. Similarly, the electronic device may obtain, based on the position of the object in the video picture and the sound data of the object, first audio data including sound data of one or more objects located at an upper part of the video picture, and obtain second audio data including sound data of one or more objects located at middle and lower parts of the video picture. In this way, the electronic device plays, by using the first-part side sound generation unit, a sound of an object located at the upper part of the video, and plays, by using the second-part side sound generation unit, a sound of an object located at the lower part of the video, so that the user can feel a difference between upper and lower directions at different positions, to improve an immersion feeling of the user in watching the video.

It should be noted that the second audio data includes sound data of at least one object, and the first audio data includes audio data of all objects other than the objects corresponding to the sound data of the second audio data. That the video picture includes three objects is used as an example. The electronic device may place, into the second audio data, sound data of one object closest to the display, and place sound data of the other two objects into the first audio data. Alternatively, the electronic device may place, into the second audio data, sound data of two objects closest to the display, and place sound data of another object into the first audio data. This is not limited in embodiments of this application.

In some examples, the audio source data includes a plurality of center channels, and the plurality of center channels are in a one-to-one correspondence with objects in the video picture. Data of one center channel is sound data of one object in the video picture. The electronic device may identify a location of each object in the video picture, obtain first audio data including sound data (that is, the data of the center channel) of one or more objects farther away from the display in the video picture, and obtain second audio data including sound data (that is, the data of the center channel) of one or more objects closer to the display in the video picture.

In some examples, when playing the audio source data of the video, the electronic device may determine whether the played video is related to a music scenario. The music scenario may include but is not limited to a concert scenario, a music video (music video, MV) scenario, a singing competition scenario, a performance scenario, and the like. When determining that the video is related to the music scenario, the electronic device may set the sound effect mode to the low-frequency enhancement mode or the loudness enhancement mode. When determining that the video is not related to the music scenario, the electronic device may set the intelligent enhancement mode to the dialogue enhancement mode or the surround enhancement mode.

In some examples, the electronic device may determine, based on a name of the video, whether the video is related to the music scenario. For example, when the name of the video includes but is not limited to music-related words such as "sing", "music", "play", and "song", it is determined that the video is related to the music scenario. In some other examples, the electronic device may identify, by using an image identification algorithm, whether an action like singing a song or playing an instrument is performed by a character in the video picture. When identifying that the character in the video picture is playing or singing, the electronic device may determine that the video is related to the music scenario.

It should be noted that the audio source data may be audio data in a video file, or the audio source data may be audio data in an audio file corresponding to the video file.

It should be further noted that the audio source data may be stored in a memory of the electronic device, or the audio source data may be obtained by the electronic device from another electronic device (for example, a server).

In some embodiments, one or more top sound generation units are included at an upper part of the first part of the electronic device. The electronic device may play a sky sound by using the one or more top sound generation units. The sky sound is a sound generated by a specified sky object in the audio. For example, the specified sky object may be an airplane, a bird, thunder and lightning, or the like. In this way, the user can sense, through hearing, height information of the specified sky object in the audio, for example, a sound of a plane flying across the sky, or a thunder sound. This increases an immersion feeling of the user in listening to the audio.

In some embodiments, one or more bottom sound generation units are included at a lower part of the first part of the electronic device. The electronic device may play a ground sound by using the one or more bottom sound generation units. The ground sound is a sound generated by a specified ground object in the audio. For example, the specified ground object may be an insect, bushes, an object in contact with the ground, and the like. In this way, the user can sense, through hearing, height information of the specified ground object in the audio, for example, an insect sound, a footstep sound, or a rain sound. This increases an immersion feeling of the user in listening to the audio.

In a possible implementation, the electronic device displays one or more sound effect mode options, and the one or more sound effect mode options are in a one-to-one correspondence with the one or more sound effect modes of the electronic device. The one or more sound effect mode options include the first mode option, and the one or more sound effect modes include the first mode. The first mode option corresponds to the first mode. The electronic device may receive an input of the user for the first mode option, and in response to the input, set the sound effect mode of the electronic device to the first mode. In this way, the electronic device may receive the input of the user, select a different sound effect mode, and process audio data of an audio based on the sound effect mode of the electronic device when playing the audio.

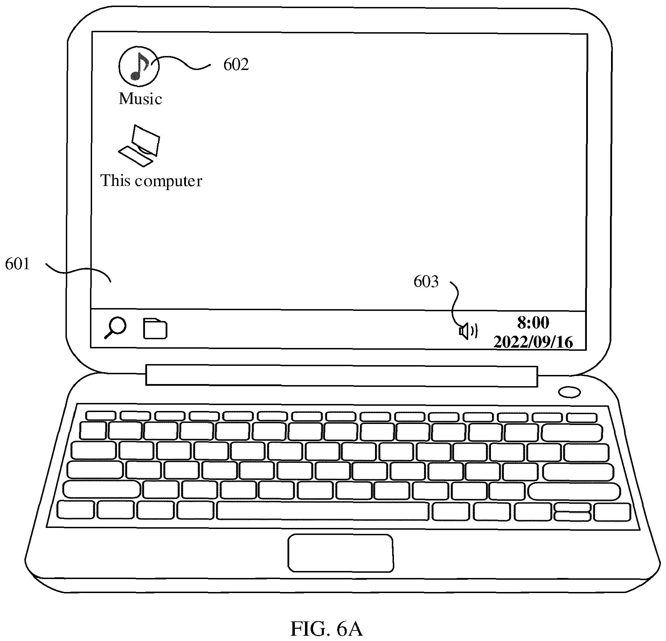

For example, as shown in FIG. 6A, the electronic device displays a desktop 601. The desktop 601 may include but is not limited to icons of one or more applications (for example, a music icon 602). A taskbar is further displayed below the icons of the one or more applications. The taskbar may include one or more function controls, and the function controls may be used to trigger the electronic device to display a corresponding function window. The one or more function controls include a function control 603.

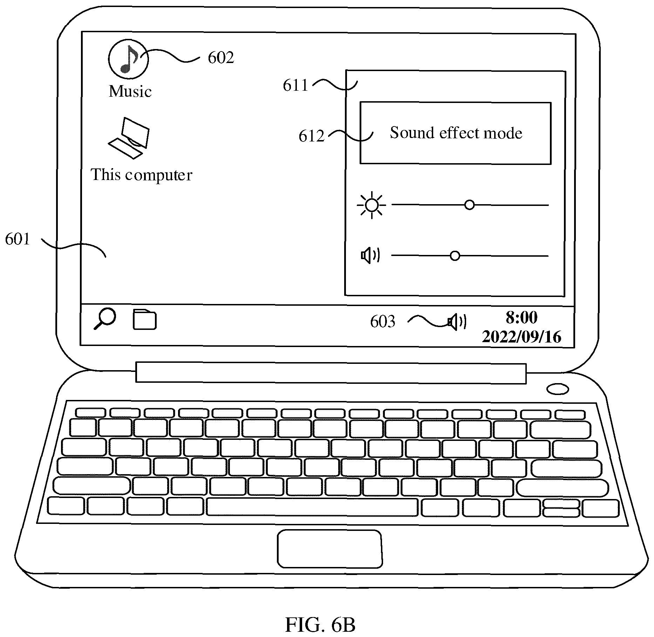

The electronic device may receive an input of the user for the function control 603, and display, in response to the input, a function window 611 shown in FIG. 6B.

As shown in FIG. 6B, the function window 611 may include but is not limited to a sound effect mode icon 612, a volume adjustment bar, and the like. The sound effect mode icon 612 may be used to trigger the electronic device to display a sound effect mode option corresponding to a sound effect mode supported by the electronic device. The volume adjustment bar may be used to adjust a volume of an audio played by the electronic device.

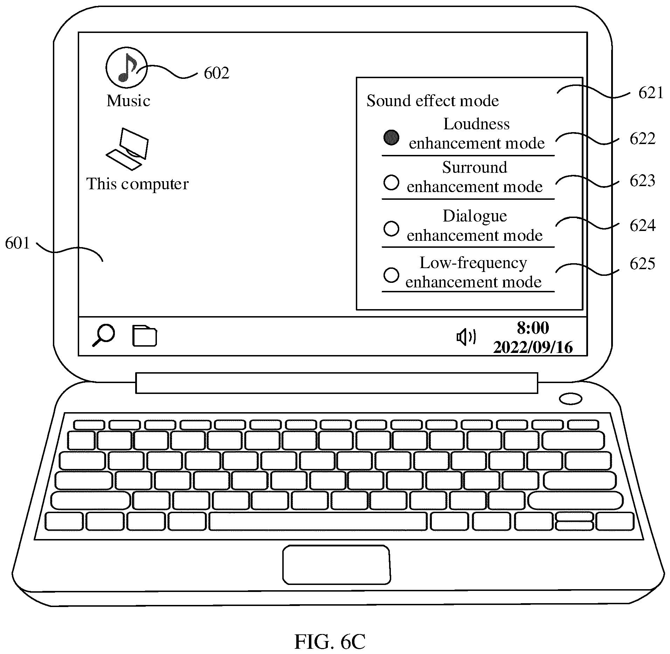

The electronic device may receive an input of the user for the sound effect mode icon 612, and display, in response to the input, a sound effect mode selection window 621 shown in FIG. 6C.

As shown in FIG. 6C, the sound effect mode selection window 621 includes one or more sound effect mode options. The one or more sound effect mode options may include but are not limited to a sound effect mode option 622, a sound effect mode option 623, a sound effect mode option 624, and a sound effect mode option 625.

The sound effect mode option 622 may be used to trigger the electronic device to set the sound effect mode to the loudness enhancement mode. The sound effect mode option 623 may be used to trigger the electronic device to set the sound effect mode to the surround enhancement mode. The sound effect mode option 624 may be used to trigger the electronic device to set the sound effect mode to the dialogue enhancement mode. The sound effect mode option 625 may be used to trigger the electronic device to set the sound effect mode to a rhythm enhancement mode.

The one or more sound effect mode options may include names of corresponding sound effect modes. For a description of each sound effect mode, refer to the embodiment shown in FIG. 4. Details are not described herein again. Herein, the sound effect mode option 622 is selected, and the sound effect mode of the electronic device is the loudness enhancement mode.

Optionally, the electronic device may receive an input of the user for the function control 603, and display the sound effect mode selection window 621 shown in FIG. 6C.

Herein, that the electronic device includes the first-part side sound generation unit 33 located on the left side of the display, the first-part side sound generation unit 34 located on the right side of the display, the second-part side sound generation unit 31 located on the left side of the keyboard, and the second-part side sound generation unit 32 located on the left side of the keyboard is used as an example to describe a process of playing a song by the electronic device.

For example, the electronic device may receive an input for the music icon 602, and display a music playing interface 630. The music playing interface 630 may include but is not limited to a song name, a play control, and the like. The play control may be used to trigger the electronic device to play a song indicated by the song name.

After receiving an input for the play control, the electronic device processes, in response to the input, audio source data (namely, audio data of the song) based on the loudness enhancement mode, to obtain audio data of each sound generation unit. For a description of processing the audio source data by the electronic device based on the sound effect mode, refer to the embodiment shown in FIG. 4. Details are not described herein again.

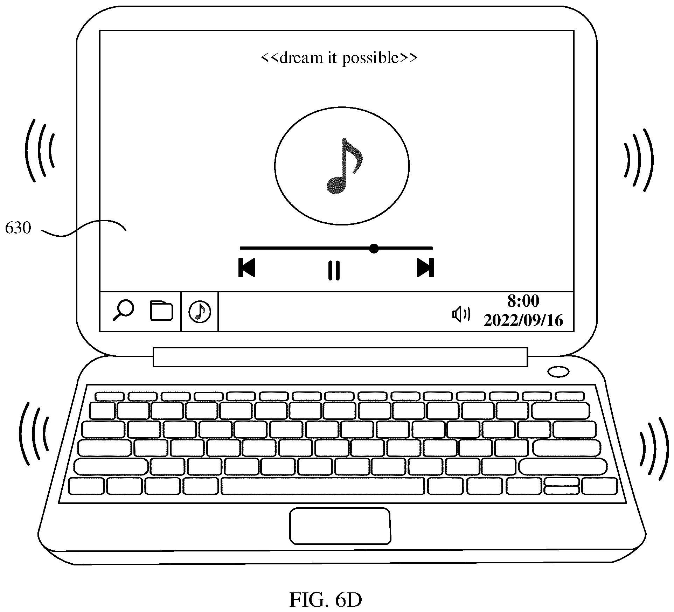

After obtaining the audio data of each sound generation unit, the electronic device may use each sound generation unit to simultaneously start playing the audio data, as shown in FIG. 6D. The electronic device plays the audio data of the left channel by using the first-part side sound generation unit 33 and the second-part side sound generation unit 31, and plays the audio data of the right channel by using the first-part side sound generation unit B and the second-part side sound generation unit B. It may be understood that when the electronic device is playing a song, the electronic device cancels displaying the play control and displays a pause control. The pause control may be used to trigger the electronic device to stop playing the audio data.

In this way, the electronic device may provide a plurality of sound effect modes for the user, to implement different audio playing effects, and improve user experience.

In some embodiments, if the electronic device includes only one first-part side sound generation unit, the sound effect mode supported by the electronic device includes but is not limited to the dialogue enhancement mode and/or the low-frequency enhancement mode. The electronic device may display only a sound effect mode option corresponding to the dialogue enhancement mode and/or the low-frequency enhancement mode.

In some other embodiments, if the electronic device includes at least two first-part side sound generation units, and the at least two first-part side sound generation units include the first-part side sound generation unit 33 and the first-part side sound generation unit 34, the two first-part side sound generation units may be respectively located on left and right sides of the display of the electronic device. The sound effect mode supported by the electronic device may include but is not limited to the loudness enhancement mode, the low-frequency enhancement mode, the surround enhancement mode, and/or the dialogue enhancement mode. The electronic device may display a sound effect mode option corresponding to the sound effect mode supported by the electronic device.

In some examples, when the sound effect mode of the electronic device is the surround enhancement mode, the electronic device may play, by using the first-part side sound generation unit located on the left side of the display, the data of the left channel obtained based on the audio data of the specified audio; and play, by using the first-part side sound generation unit located on the right side of the display, the data of the right channel obtained based on the audio data of the specified audio.

In a possible implementation, when displaying the one or more sound effect mode options, the electronic device may further display a slider bar. The slider bar may be used to control the electronic device to adjust the first audio data based on a value of the slider bar when processing the audio source data to obtain the first audio data. In this way, the electronic device may receive adjustment of the slider bar by the user, set an implementation effect of the sound effect mode, and select a sound effect mode with an appropriate implementation effect.

For example, in the loudness enhancement mode, a value of a loudness factor in a multi-channel processing algorithm may be changed by changing the value of the slider bar, to change an amplitude of the first audio data of the electronic device, so as to adjust a volume of the first audio data played by the electronic device. The value of the slider bar in the loudness enhancement mode may be used for the loudness factor. A larger value (the value of the loudness factor) of the slider bar indicates a higher volume of the first audio data played by the electronic device, and a smaller value (the value of the loudness factor) of the slider bar indicates a lower volume of the first audio data played by the electronic device.

In the surround mode, a value of a surround factor in the multi-channel processing algorithm may be changed by changing the value of the slider bar, to adjust a playing effect of a surround sound effect of the first-part side sound generation unit. A larger value of the surround factor indicates a farther distance between the user and a position of a virtual audio source simulated by the data of the surround channel, and a clearer surround effect. To be specific, as the surround factor increases, when the user listens to the data of the surround channel played by the electronic device, the user senses that the distance between the user and the audio source also increases accordingly. A larger value of the slider bar indicates a larger value of the surround factor and a clearer surround effect. A smaller value of the slider bar indicates a smaller value of the surround factor and an unclearer surround effect.

In the dialogue enhancement mode, a value of a human voice factor in the multi-channel processing algorithm may be changed by changing the value of the slider bar, to change the amplitude of the first audio data of the electronic device, so as to adjust the volume of the first audio data played by the electronic device. A larger value (the value of the human voice factor) of the slider bar indicates a higher volume of the first audio data played by the electronic device, and a clearer human voice. A smaller value (the value of the human voice factor) of the slider bar indicates a lower volume of the first audio data played by the electronic device, and an unclearer human voice.

In the low-frequency enhancement mode, a value of a low-frequency factor in the multi-channel processing algorithm may be changed by changing the value of the slider bar, to change the amplitude of the first audio data of the electronic device, so as to adjust the volume of the first audio data played by the electronic device. A larger value (the value of the low-frequency factor) of the slider bar indicates a higher volume of the first audio data played by the electronic device, and a clearer low frequency. A smaller value (the value of the low-frequency factor) of the slider bar indicates a lower volume of the first audio data played by the electronic device, and an unclearer low frequency.

In this way, loudness, a surround sound range, vibration intensity, and the like of the first audio data played by the electronic device may be adjusted based on a percentage value.

It should be noted that the value of the slider bar is always greater than zero, and the electronic device processes the audio source data based on a sound effect mode and a corresponding value of the slider bar.

In some examples, the slider bar of the electronic device is divided into 10 equal parts, and the electronic device may set an initial value of a slider bar of each sound effect mode to 50%. If the value of the slider bar is adjusted to be greater than 50%, a channel processing manner in a corresponding sound effect mode increases based on the influence factor. If the value of the slider bar is adjusted to be less than 50%, a channel processing manner in a corresponding sound effect mode decreases based on the influence factor.

For example, in a surround sound field mode, the influence factor may be understood as the surround factor in a surround channel processing algorithm. When the value of the slider bar is 50%, and the value of the slider bar is adjusted to 100%, the value of the surround factor in the surround channel processing algorithm may increase according to a preset correspondence, to enhance an extension effect of the surround channel. The extension effect is better than an effect of the sound effect mode in which the value of the slider bar is 50%. When the value of the slider bar is adjusted to 10%, the value of the surround factor in the surround channel processing algorithm may decrease according to the preset correspondence, to weaken the extension effect of the surround channel. The extension effect is worse than an effect of the sound effect mode in which the value of the slider bar is 50%.

In this way, when the value of the slider bar is a minimum value of a current sound effect mode, that is, 10%, in a case in which a collaborative sound generation mode is not enabled, even if a surround effect of the surround sound effect is worse than the effect of the sound effect mode in which the value of the slider bar is 50%, when the electronic device and another electronic device jointly play audio data, user experience is better than that when a single electronic device separately plays the audio data. For example, when the value of the slider bar is a preset value 1, the distance between the analog audio source and the user is a preset distance 1 when the first-part side sound generation unit of the electronic device plays the first audio data, and when the value of the slider bar is a preset value 2, the distance between the analog audio source and the user is a preset distance 2 when the first-part side sound generation unit of the electronic device plays the first audio data, where the preset value 1 is less than the preset value 2, and the preset distance 1 is less than the preset distance 2.

For another example, in the loudness enhancement mode, when the value of the slider bar is 50%, loudness of the first audio data is 5 dB. When the value of the slider bar is adjusted to be less than 50%, for example, 20%, the loudness of the first audio data is adjusted to 2 dB. Herein, the influence factor may be considered as the loudness factor. When the value of the slider bar is 20%, the value of the loudness factor is 0.4. Similarly, for descriptions of the dialogue enhancement mode and the low-frequency enhancement mode, refer to the description of the loudness enhancement mode. Details are not described herein again.

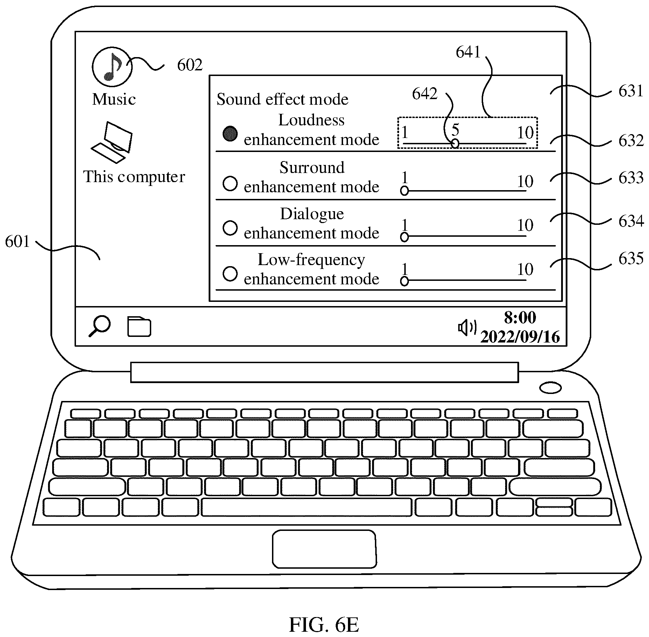

For example, when receiving an input of the user for the function control 603 shown in FIG. 6A or the sound effect mode icon 612 shown in FIG. 6B, the electronic device may display a sound effect mode selection window 631 shown in FIG. 6E.

As shown in FIG. 6E, the sound effect mode selection window 631 includes one or more sound effect mode options. The one or more sound effect mode options may include but are not limited to a sound effect mode option 632, a sound effect mode option 633, a sound effect mode option 634, and a sound effect mode option 635.

The sound effect mode option 632 may be used to trigger the electronic device to set the sound effect mode to the loudness enhancement mode. The sound effect mode option 633 may be used to trigger the electronic device to set the sound effect mode to the surround enhancement mode. The sound effect mode option 634 may be used to trigger the electronic device to set the sound effect mode to the dialogue enhancement mode. The sound effect mode option 635 may be used to trigger the electronic device to set the sound effect mode to a rhythm enhancement mode. The one or more sound effect mode options may include names of corresponding sound effect modes.

Each of the one or more sound effect mode options includes a corresponding slider bar. As shown in FIG. 6E, the sound effect mode option 632 includes a slider bar 641, and the slider bar 641 includes a lowest value, a highest value, and a slider 642. The lowest value may be used to represent the lowest value of the slider bar 641 in the loudness enhancement mode, and the lowest value herein is 1, that is, 10%. The highest value may be used to represent the highest value of the slider bar 641 in the loudness enhancement mode, and the highest value herein is 10, that is, 100%. The slider 642 may be used to change a value of the slider bar 641. A value of the slider bar 641 when the slider 642 is at a specific position of the slider bar 641 may also be displayed near the slider 642, and the value herein is 5, that is, 50%. For a description of the slider bar in each sound effect mode, refer to the foregoing embodiment. Details are not described herein again.

When receiving an input for dragging the slider 642 to the left, the electronic device may decrease the value of the slider bar 641, for example, the value of the slider bar 641 is reduced to 20%, and the electronic device may process the audio source data based on the value of the slider bar to obtain the first audio data. The electronic device may play the first audio data.

It may be understood that a surround sound effect in a scenario in which the value of the slider bar is 50% is stronger than a surround sound effect in a scenario in which the value of the slider bar is 20%. For example, in the scenario shown in FIG. 6D, a distance between a virtual analog audio source and the user may be 20 cm, so that the user senses that a width of a sound of the audio source extends distances of 0.2 m to both the left and right along the central axis of the electronic device. After the value of the slider bar is reduced from 50% to 20%, the distance between the user and the virtual audio source simulated by the audio data played by the first-part side sound generation unit may be 50 cm, so that the user senses that the width of the sound of the audio source extends distances of 0.5 m to both the left and right along the central axis of the electronic device. A farther distance between the user and the virtual audio source indicates a clearer surround effect. It may be understood that the correspondence between the value of the slider bar and the value of the distance is merely an example. In a specific implementation, the distance may be another value. This is not limited in embodiments of this application.

In some applications, the first-part side sound generation unit of the electronic device is deployed on the housing B. When an angle between the housing B and the housing C is in different angle ranges, different auditory experience can be brought to the user.

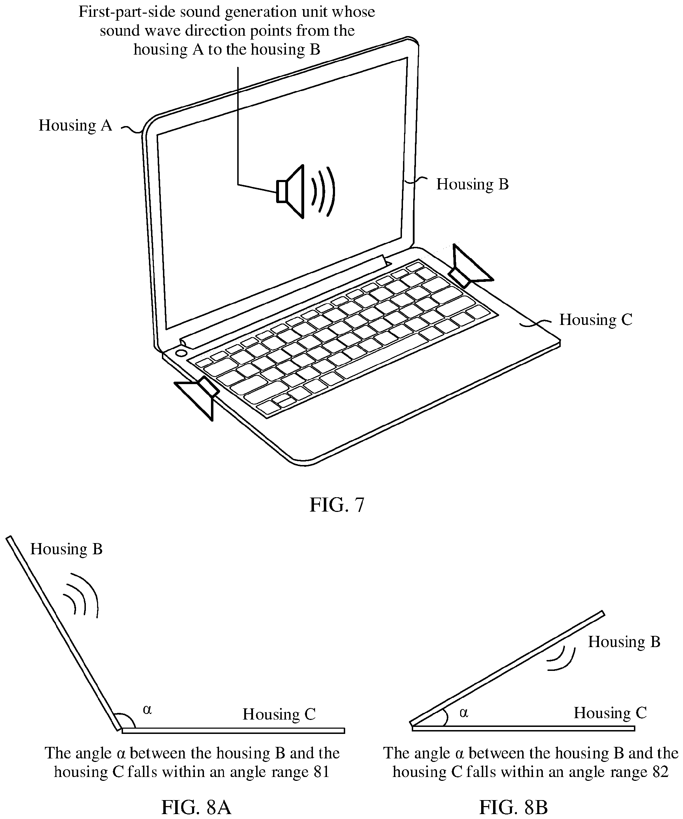

For example, as shown in FIG. 7, when the first-part side sound generation unit of the electronic device is deployed on the housing B, a sound wave direction of the first-part side sound generation unit points from the housing A to the housing B.

When an angle α between the housing B and the housing C of the electronic device falls within an angle range 81 shown in FIG. 8A, a sound is clearer because a sound wave emitted by the first-part side sound generation unit faces the ear of the user.

When the angle α between the housing B and the housing C of the electronic device falls within an angle range 82 shown in FIG. 8B, because a local cavity is formed between the housing B and the housing C, the sound wave emitted by the first-part side sound generation unit can be reflected back and forth, so that a reverberation feeling of the sound is enhanced, and the sound is fuller.

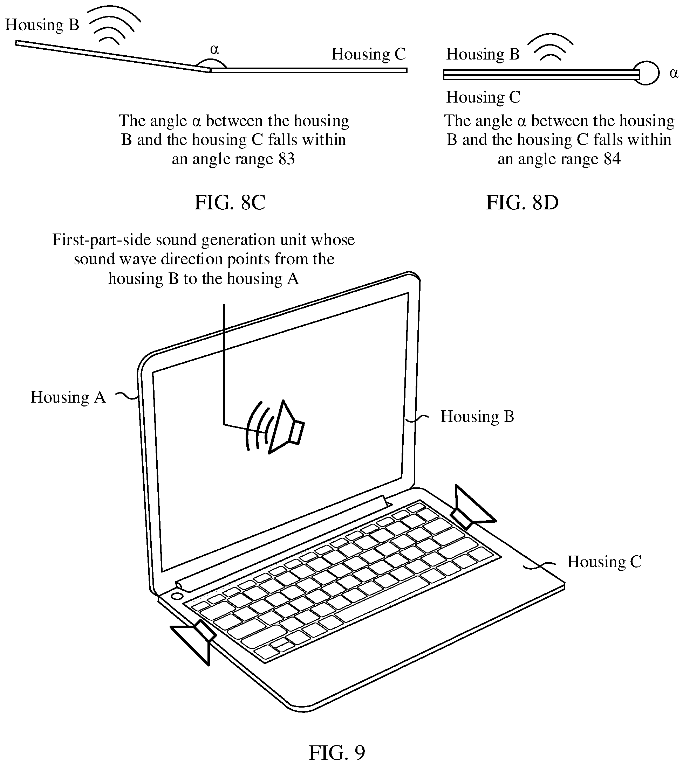

When the angle α between the housing B and the housing C of the electronic device falls within an angle range 83 shown in FIG. 8C, the housing B is closer to the desktop, and more sound waves are reflected by the desktop, so that the sound has stronger energy, and the sound is louder.

When the angle α between the housing B and the housing C of the electronic device falls within an angle range 84 shown in FIG. 8D, the housing A and the housing D overlap, and the electronic device may play a picture and a sound by using the housing B. This helps the user to hold the electronic device to play an audio and a video. When the electronic device plays the video, the electronic device may be considered as a handheld cinema, and the sound and picture are more synchronized and an immersion feeling is stronger. The electronic device may be further placed on an electronic device holder, so that the user can adjust a position of the electronic device.

A maximum value of the angle range 81 is less than or equal to a minimum value of the angle range 83. A minimum value of the angle range 81 is greater than or equal to a maximum value of the angle range 82, and a minimum value of the angle range 84 is greater than or equal to a maximum value of the angle range 83. For example, the angle range 82 is from 0 degrees to 45 degrees, the angle range 81 is from 45 degrees to 135 degrees, the angle range 83 is from 135 degrees to 180 degrees, and the angle range 84 is from 180 degrees to 360 degrees.

For a description of the sound generation unit located on the housing B, refer to the description of the first-part side sound generation unit shown in FIG. 3A, and for a description of controlling, by the electronic device, the sound generation unit on the housing B to play audio data, refer to the embodiments shown in FIG. 4 and FIG. 5A and FIG. 5B. Details are not described herein again.

In a possible implementation, the first-part side sound generation unit of the electronic device is deployed on the housing B. The electronic device may detect the angle between the housing B and the housing C of the electronic device, and adjust loudness of audio data of the first-part side sound generation unit and/or the second-part side sound generation unit. In this way, when the angle between the housing B and the housing C is different, loudness of audio data of the sound generation unit may be adjusted, to provide a better playing effect for the user.

For example, as shown in FIG. 7, when the first-part side sound generation unit of the electronic device is deployed on the housing B, the sound wave direction of the first-part side sound generation unit points from the housing A to the housing B. When the angle α between the housing B and the housing C of the electronic device falls within the angle range 81 shown in FIG. 8A, the electronic device may directly play respective audio data by using the sound generation unit, where a volume of the audio data played by the first-part side sound generation unit of the electronic device is a specified volume value 80. In some examples, sound sharpness is improved because the sound generated by the B housing is straight out, and a direction of the sound wave faces the user. The electronic device may reduce the sound sharpness by reducing a frequency of high-frequency audio data.

When the angle α between the housing B and the housing C of the electronic device is within the angle range 82 shown in FIG. 8B, the electronic device may adjust loudness of audio data of each sound generation unit based on the angle α, for example, decrease a volume of the first-part side sound generation unit, or decrease a volume of the first-part side sound generation unit and increase a volume of the second-part side sound generation unit. Herein, the volume of the audio data played by the first-part side sound generation unit of the electronic device is less than the specified volume value 80. In this way, the reverberation effect caused by the local cavity formed between the screen part and the keyboard part to reflect back and forth the sound wave emitted by the first-part side sound generation unit can be reduced, so that the sound is clearer.

When the angle α between the housing B and the housing C of the electronic device is within the angle range 83 shown in FIG. 8C, the electronic device may adjust loudness of audio data of each sound generation unit based on the angle α, for example, increase a volume of the first-part side sound generation unit, or increase a volume of the first-part side sound generation unit and decrease a volume of the second-part side sound generation unit. Herein, the volume of the audio data played by the first-part side sound generation unit of the electronic device is greater than the specified volume value 80. In this way, because a distance between the first-part side sound generation unit and the user increases, the electronic device may increase the volume of the first-part side sound generation unit, so that the user can clearly hear the sound of the first-part side sound generation unit.

When the angle α between the housing B and the housing C of the electronic device is within the angle range 84 shown in FIG. 8D, the electronic device may adjust loudness of audio data of each sound generation unit based on the angle α, for example, increase a volume of the second-part side sound generation unit, or decrease a volume of the first-part side sound generation unit and increase a volume of the second-part side sound generation unit. Herein, the volume of the audio data played by the first-part side sound generation unit of the electronic device is less than or equal to the specified volume value 80. In this way, because the second-part side sound generation unit is located on the back of the housing B, the volume of the second-part side sound generation unit may be increased, so that the user can hear the sound of the second-part side sound generation unit more clearly.

The minimum value of the angle range 81 is greater than or equal to the maximum value of the angle range 82. The maximum value of the angle range 81 is less than or equal to the minimum value of the angle range 83. The maximum value of the angle range 83 is less than or equal to the minimum value of the angle range 84. For example, the angle range 82 is from 0 degrees to 45 degrees, the angle range 81 is from 45 degrees to 135 degrees, the angle range 83 is from 135 degrees to 180 degrees, and the angle range 84 is from 180 degrees to 360 degrees.

In some embodiments, when the first-part side sound generation unit of the electronic device is deployed on the housing B, the electronic device may provide only the surround enhancement mode, or set an initial sound effect mode of the electronic device to the surround enhancement mode. The initial sound effect mode is a sound effect mode of the electronic device after the electronic device is powered on. In this way, the electronic device may simultaneously play the specified audio by using the second-part side sound generation unit and the first-part side sound generation unit, so that an acoustic image and a picture of an audio can be at a same height as much as possible, and a surround effect is improved.

In some other embodiments, because a vibration amplitude of the first-part side sound generation unit is large in the low-frequency enhancement mode, to avoid affecting a display effect of the display, the electronic device may set the low-frequency enhancement mode to an unavailable state in a video playing process. When the low-frequency enhancement mode is set to the unavailable state, the electronic device does not display a low-frequency enhancement mode option corresponding to the low-frequency enhancement mode, or the electronic device displays a low-frequency enhancement mode option that is unavailable.

In some other embodiments, the first-part side sound generation unit of the electronic device is deployed on the housing B, and the electronic device may directly not display the low-frequency enhancement mode option corresponding to the low-frequency enhancement mode.

In some applications, the first-part side sound generation unit of the electronic device is deployed on the housing A. When the angle between the housing B and the housing C is in different angle ranges, different auditory experience can be brought to the user.

For example, as shown in FIG. 9, when the first-part side sound generation unit of the electronic device is deployed on the housing A, a sound wave direction of the first-part side sound generation unit points from the housing B to the housing A.

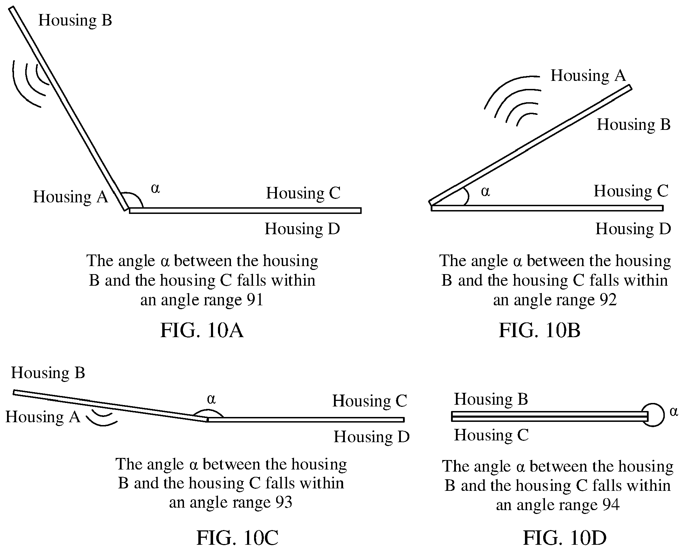

When an angle α between the housing B and the housing C of the electronic device falls within an angle range 91 shown in FIG. 10A, a sound is more open because a sound wave emitted by the first-part side sound generation unit faces a direction that faces away from the user.

When the angle α between the housing B and the housing C of the electronic device falls within an angle range 92 shown in FIG. 10B, the housing A is closer to the user, and a sound is clearer.

When the angle α between the housing B and the housing C of the electronic device falls within an angle range 93 shown in FIG. 10C, the housing A is closer to the desktop, and more sound waves are reflected by the desktop, so that the sound has stronger energy, and the sound is louder.

When the angle α between the housing B and the housing C of the electronic device falls within an angle range 94 shown in FIG. 10D, the housing A and the housing D overlap. This helps the user to hold the electronic device. When the electronic device plays an audio, the housing A vibrates to generate a sound, to bring a stronger low-frequency vibration feeling.

A maximum value of the angle range 91 is less than or equal to a minimum value of the angle range 93. A minimum value of the angle range 91 is greater than or equal to a maximum value of the angle range 92, and a minimum value of the angle range 94 is greater than or equal to a maximum value of the angle range 93. For example, the angle range 92 is from 0 degrees to 45 degrees, the angle range 91 is from 45 degrees to 135 degrees, the angle range 93 is from 135 degrees to 190 degrees, and the angle range 94 is from 190 degrees to 360 degrees.

For a description of controlling, by the electronic device, the sound generation unit on the housing A to play audio data, refer to the embodiments shown in FIG. 4 and FIG. 5A and FIG. 5B. Details are not described herein again.

In another possible implementation, the first-part side sound generation unit of the electronic device is deployed on the housing A. The electronic device may detect the angle between the housing B and the housing C of the electronic device, and adjust loudness of audio data of the first-part side sound generation unit and the second-part side sound generation unit.

For example, as shown in FIG. 9, when the first-part side sound generation unit of the electronic device is deployed on the housing A, a sound wave direction of the first-part side sound generation unit points from the housing B to the housing A.

When the angle α between the housing B and the housing C of the electronic device falls within the angle range 91 shown in FIG. 10A, the electronic device may directly play respective audio data by using the sound generation unit, where a volume of the audio data played by the first-part side sound generation unit of the electronic device is a specified volume value 90.

When the angle α between the housing B and the housing C of the electronic device is within the angle range 92 shown in FIG. 10B, the electronic device may adjust loudness of audio data of each sound generation unit based on the angle α, for example, increase a volume of the first-part side sound generation unit, or increase a volume of the first-part side sound generation unit and decrease a volume of the second-part side sound generation unit. Herein, the volume of the audio data played by the first-part side sound generation unit of the electronic device is greater than the specified volume value 90. In this way, because the sound wave direction of the first-part side sound generation unit faces away from the user, if the volume of the first-part side sound generation unit is increased, clarity of the audio listened to by the user can be enhanced.

When the angle α between the housing B and the housing C of the electronic device is within the angle range 93 shown in FIG. 10C, the electronic device may adjust loudness of audio data of each sound generation unit based on the angle α, for example, decrease a volume of the first-part side sound generation unit, or decrease a volume of the first-part side sound generation unit and increase a volume of the second-part side sound generation unit. Herein, the volume of the audio data played by the first-part side sound generation unit of the electronic device is less than the specified volume value 90. In this way, high-frequency energy enhancement caused by a desktop reflection formed between the screen part and the desktop can be reduced, and sharpness of the sound can be reduced. For another example, the volume of the first-part side sound generation unit is increased, or the volume of the first-part side sound generation unit is increased and the volume of the second-part side sound generation unit is decreased. Herein, the volume of the audio data played by the first-part side sound generation unit of the electronic device is greater than the specified volume value 90. In this way, a desktop reflection formed between the screen part and the desktop can be enhanced, a reverberation feeling can be increased, and the volume of the first-part side sound generation unit that is farther away from the user can be increased, so that the user can simultaneously listen to sounds of the first-part side sound generation unit and the second-part side sound generation unit. This can avoid a case in which the user cannot hear the sound of the first-part side sound generation unit because the volume of the second-part side sound generation unit that is closer to the user is excessively high.

When the angle α between the housing B and the housing C of the electronic device is within the angle range 94 shown in FIG. 10D, the electronic device may adjust loudness of audio data of each sound generation unit based on the angle α, for example, decrease a volume of the first-part side sound generation unit, or decrease a volume of the first-part side sound generation unit and increase a volume of the second-part side sound generation unit. Herein, the volume of the audio data played by the first-part side sound generation unit of the electronic device is less than the specified volume value 90. In this way, the reverberation effect caused by a sound reflection between the housing A and the housing D can be reduced, and clarity of the sound can be enhanced.

Optionally, because the housing A and the housing D overlap, to reduce vibration of the electronic device caused by vibration of the housing A, the electronic device may not play the data of the low-frequency channel by using the first-part side sound generation unit.

The maximum value of the angle range 91 is less than or equal to the minimum value of the angle range 93. The minimum value of the angle range 91 is greater than or equal to the maximum value of the angle range 92, and the minimum value of the angle range 94 is greater than or equal to the maximum value of the angle range 93. For example, the angle range 92 is from 0 degrees to 45 degrees, the angle range 91 is from 45 degrees to 135 degrees, the angle range 93 is from 135 degrees to 190 degrees, and the angle range 94 is from 190 degrees to 360 degrees.

In some embodiments, when the first-part side sound generation unit of the electronic device is deployed on the housing A, the electronic device may provide only the low-frequency enhancement mode, or set an initial sound effect mode of the electronic device to the low-frequency enhancement mode. The initial sound effect mode is a sound effect mode of the electronic device after the electronic device is powered on. In this way, the electronic device may play a low-frequency signal by using the first-part side sound generation unit, to enhance a low-frequency atmosphere. In addition, the first-part side sound generation unit is responsible for playing a low-frequency signal, so that a problem of keyboard noise caused by playing a low-frequency signal by the second-part side sound generation unit can be avoided.

In a possible implementation, the electronic device includes a plurality of first-part side sound generation units, a part of first-part side sound generation units are deployed on the housing A of the electronic device, and the other part of first-part side sound generation units are deployed on the housing B of the electronic device. The electronic device may implement different playing effects when angles between the housing B and the housing C are different. For details, refer to descriptions of the embodiments shown in FIG. 7 to FIG. 10D. Details are not described herein again. Similarly, the electronic device may adjust loudness of the first-part side sound generation unit on the housing A and loudness of the first-part side sound generation unit on the housing B based on the angle between the housing B and the housing C of the electronic device. For a specific description, refer to descriptions of the embodiments shown in FIG. 7 to FIG. 10D. Details are not described herein again.

In some embodiments, when the sound effect mode of the electronic device is the surround enhancement mode, the electronic device may play the data of the left surround channel and the right surround channel by using the first-part side sound generation unit on the housing B, and play data of another channel by using the first-part side sound generation unit on the housing A, or control the first-part side sound generation unit on the housing A not to play audio data.

In some examples, when the sound effect mode of the electronic device is the low-frequency enhancement mode, the electronic device may play the data of the low-frequency channel by using the first-part side sound generation unit on the housing A, and play data of another channel by using the first-part side sound generation unit on the housing B, or control the first-part side sound generation unit on the housing B not to play audio data.

In a possible implementation, the electronic device may adjust, based on the angle between the housing B and the housing C of the electronic device, a channel played by each sound generation unit.

For example, when the electronic device is a foldable screen device, for a description of the first-part side sound generation unit of the electronic device on the housing A or the housing B, refer to the embodiments shown in FIG. 7 to FIG. 10D. Details are not described herein again.

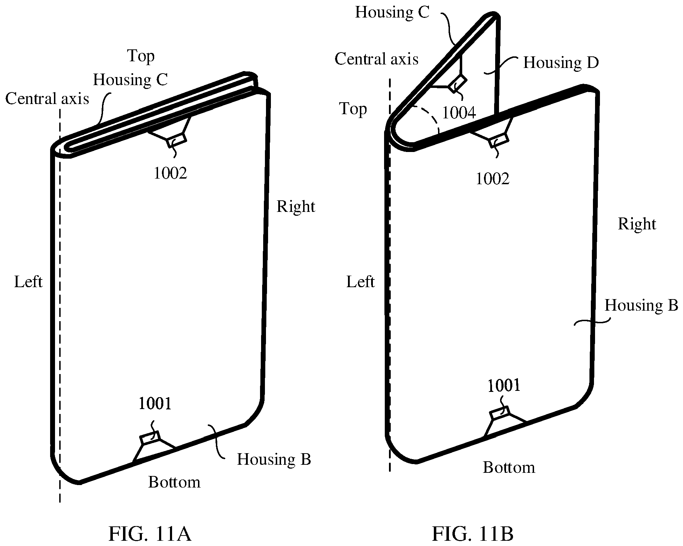

For another example, when the electronic device is a foldable screen device, and a folding manner of the electronic device is left-right folding, if the electronic device is in a folded state, as shown in FIG. 11A, the electronic device includes a sound generation unit 1001, a sound generation unit 1002, a sound generation unit 1003, and a sound generation unit 1004. The sound generation unit 1003 and the sound generation unit 1004 are located in the second part, and the second part is blocked by the first part. Therefore, the sound generation unit 1003 and the sound generation unit 1004 are not shown in FIG. 11A. The sound generation unit 1001 and the sound generation unit 1002 are located in the first part of the electronic device.

The sound generation unit 1002 and the sound generation unit 1004 are located at the top of the electronic device, the sound generation unit 1001 and the sound generation unit 1003 are located at the bottom of the electronic device, the sound generation unit at the top of the electronic device may be used to play the sky sound, and the sound generation unit at the bottom of the electronic device may be used to play the ground sound. It should be noted that all sound generation units of the electronic device may play the data of the left channel and the right channel, and/or the data of the left surround channel and the right surround channel, and/or the data of the center channel, and/or the data of the low-frequency channel.

In some examples, when the electronic device plays a video, the sound generation unit located at the top of the electronic device may be used to play a sound of an object that is closer to the sound generation unit located at the top and that is in a video picture, and the sound generation unit located at the bottom of the electronic device may be used to play a sound of an object that is closer to the sound generation unit at the bottom and that is in the video picture.

When the electronic device is in a landscape state (that is, the sound generation unit at the top of the electronic device rotates to the left or right side as shown in FIG. 11A), the sound generation unit located on the left side of a displayed picture of the electronic device may be used to play the data of the left channel, and the sound generation unit located on the right side of the displayed picture of the electronic device may be used to play the data of the right channel; and/or the sound generation unit located on the left side of the displayed picture of the electronic device may be used to play the data of the left surround channel, and the sound generation unit located on the right side of the displayed picture of the electronic device may be used to play the data of the right surround channel.

If the electronic device is in a semi-folded state, as shown in FIG. 11B, the electronic device may play, by using the second-part side sound generation unit, a sound of an object that is farther away from the display in the video picture, and play, by using the first-part side sound generation unit, a sound of an object that is closer to the display in the video picture. In some examples, for a description of playing, by the electronic device in the semi-folded state, an audio by using each sound generation unit, refer to the embodiments shown in FIG. 4 and FIG. 5A and FIG. 5B. Details are not described herein again.

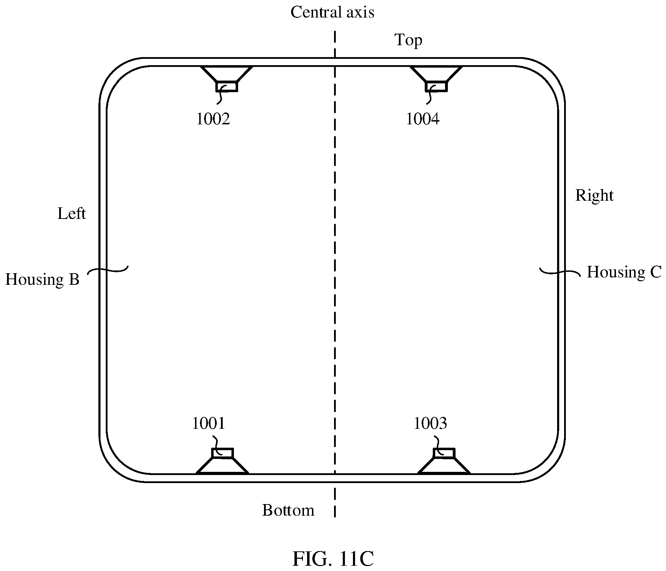

If the electronic device is in an unfolded state, as shown in FIG. 11C, the electronic device may play the data of the left channel by using the sound generation unit located on the left side, for example, the sound generation unit 1002 and the sound generation unit 1001 shown in FIG. 11C, and the electronic device may play the data of the right channel by using the sound generation unit located on the right side, for example, the sound generation unit 1003 and the sound generation unit 1004 shown in FIG. 11C; and/or play the data of the left surround channel by using the sound generation unit located on the left side, and play the data of the right surround channel by using the sound generation unit located on the right side. Optionally, the electronic device may further play the data of the low-frequency channel or the center channel by using the sound generation units. It should be noted that, when an angle of the electronic device changes, for example, the central axis of the electronic device rotates from an up-down direction shown in FIG. 11C to a left-right direction, a sound generation unit located on the left side of the electronic device and a sound generation unit located on the right side of the electronic device are different from those shown in FIG. 11C.

It should be noted that the foldable screen device shown in FIG. 11A to FIG. 11C includes a foldable screen that is folded outward. When the foldable screen device includes a foldable screen that is folded inward, the housing A or the housing D of the electronic device also includes a display. For descriptions of playing audio data by each sound generation unit when the electronic device is in the unfolded state or the semi-folded state, refer to the embodiment shown in FIG. 11A to FIG. 11C. Details are not described herein again. When the electronic device is in the folded state, the housing B or the housing C in FIG. 11A may be considered as the housing A or the housing D of the electronic device, and further reference may be made to the description of playing audio data by each sound generation unit in FIG. 11A.

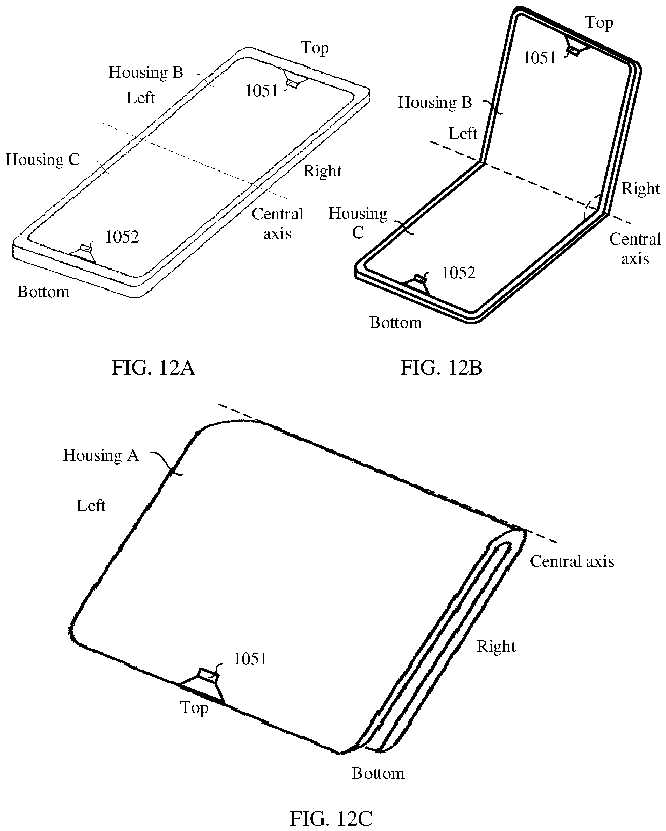

For another example, when the electronic device is a foldable screen device, and a folding manner of the electronic device is up-down folding, if the electronic device is in the unfolded state, as shown in FIG. 12A, the electronic device includes a sound generation unit 1051 and a sound generation unit 1052. The sound generation unit 1051 is located in the first part, and the sound generation unit 1052 is located in the second part of the electronic device.

The sound generation unit 1051 is located at the top of the electronic device, and the sound generation unit 1052 is located at the bottom of the electronic device. The sound generation unit located at the top of the electronic device may be used to play the sky sound, and the sound generation unit located at the bottom of the electronic device may be used to play the ground sound. It should be noted that all sound generation units of the electronic device may play the data of the left channel and the right channel, and/or the data of the left surround channel and the right surround channel, and/or the data of the center channel, and/or the data of the low-frequency channel.

In some examples, when the electronic device plays a video, the sound generation unit located at the top of the electronic device may be used to play a sound of an object that is closer to the sound generation unit located at the top and that is in a video picture, and the sound generation unit located at the bottom of the electronic device may be used to play a sound of an object that is closer to the sound generation unit at the bottom and that is in the video picture.

When the electronic device is in a landscape state (that is, the sound generation unit at the top of the electronic device rotates to the left or right side as shown in FIG. 12A), the sound generation unit located on the left side of a displayed picture of the electronic device may be used to play the data of the left channel, and the sound generation unit located on the right side of the displayed picture of the electronic device may be used to play the data of the right channel; and/or the sound generation unit located on the left side of the displayed picture of the electronic device may be used to play the data of the left surround channel, and the sound generation unit located on the right side of the displayed picture of the electronic device may be used to play the data of the right surround channel.

If the electronic device is in a semi-folded state, as shown in FIG. 12B, the electronic device may play, by using the second-part side sound generation unit, a sound of an object that is farther away from the display in the video picture, and play, by using the first-part side sound generation unit, a sound of an object that is closer to the display in the video picture. In some examples, for a description of playing, by the electronic device in the semi-folded state, an audio by using each sound generation unit, refer to the embodiments shown in FIG. 4 and FIG. 5A and FIG. 5B. Details are not described herein again.

If the electronic device is in a folded state, as shown in FIG. 12C, the electronic device may play audio source data by using the sound generation unit. In this way, different playing effects can be implemented when the foldable screen device plays an audio in different unfolded states.

In a possible implementation, the first-part side sound generation unit of the electronic device is deployed at a joint between the housing A and the housing B (which may be understood as deployed on a side edge of the screen part). In this way, the first-part side sound generation unit may improve a surround feeling in different orientations by using the first-part side sound generation unit.

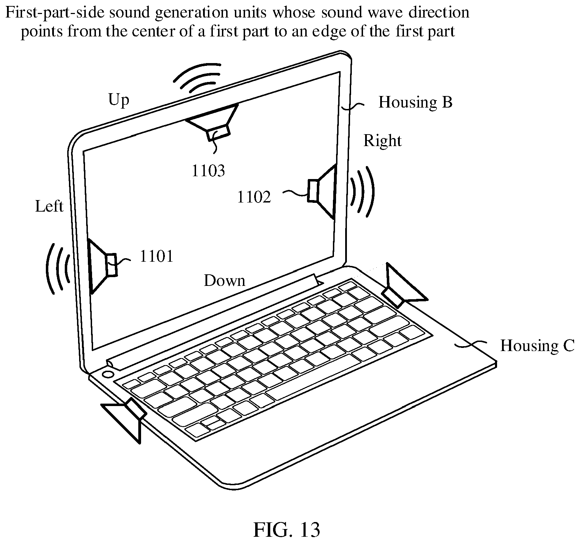

For example, as shown in FIG. 13, the electronic device includes one or more first-part side sound generation units. The one or more first-part side sound generation units include a first-part side sound generation unit 1101, a first-part side sound generation unit 1102, and a first-part side sound generation unit 1103. The first-part side sound generation unit 1101 is located on the left side of the screen part, and a beam direction of a sound wave of the first-part side sound generation unit 1101 points from the center of the display to the left side of the display. The first-part side sound generation unit 1102 is located on the right side of the screen part, and a beam direction of a sound wave of the first-part side sound generation unit 1102 points from the center of the display to the right side of the display. The first-part side sound generation unit 1103 is located on the upper side of the screen part, and a beam direction of a sound wave of the first-part side sound generation unit 1103 points from the center of the display to the upper side of the display. In some examples, the first-part side sound generation unit 11003 may be used to play a sky sound. For details, refer to the foregoing embodiments. Details are not described herein again.

In a possible implementation, when playing a video, the electronic device may identify a specified object in a video picture, and identify audio data of the specified object in audio source data of the video. The electronic device may play, based on a position of the specified object on the display, the audio data of the specified object by using one or more sound generation units closest to the specified object. In this way, the electronic device may play the audio data of the specified object based on a movement track of the specified object in the video picture, to implement a playing effect in which a sound changes with the specified object, bring the user audio-visual experience in which the sound is generated by the specified object, and enhance an immersion feeling of the video.

The electronic device may identify all sounds of the specified object in the audio source data based on a sound feature of the specified object. The electronic device may further identify the specified object in the video picture and the audio data of the specified object in real time.

In some examples, the specified object is a transportation tool like an airplane, a train, a car, or a ship. When the specified object moves from the left side of the video picture to the right side of the video picture, the electronic device may play the audio data of the specified object by using the first-part side sound generation unit 1101, the first-part side sound generation unit 1103, and the first-part side sound generation unit 1102 sequentially. For example, when an airplane in the video takes off, the airplane moves from the lower left corner of the video picture to the upper left corner of the video picture. When the airplane is located at the lower left corner of the video picture, the electronic device may play a sound of the airplane by using the first-part side sound generation unit 1101. When the airplane is located in the middle of the video picture, the electronic device may play the sound of the airplane by using the first-part side sound generation unit 1103. When the airplane is located at the upper right corner of the video picture, the electronic device may play the sound of the airplane by using both the first-part side sound generation unit 1102 and the first-part side sound generation unit 1103. In this way, a take-off process of the airplane can be reflected in a sound aspect.

It should be noted that, not limited to the transportation tool, the specified object may alternatively be a role, an object, or the like in the video. This is not limited in embodiments of this application.

Optionally, the first-part side sound generation unit and the second-part side sound generation unit of the electronic device may be used to jointly play the audio data of the specified object. For example, when a movement track of the specified object in the video picture is from bottom to top, and the specified object is at the bottom, the electronic device may play the audio data of the specified object by using the second-part side sound generation unit. After the specified object moves upward, the electronic device may play the audio data of the specified object by using the first-part side sound generation unit. For another example, when the movement track of the specified object in the video picture is from far to near, and the specified object is at a farthest position, the electronic device may play the audio data of the specified object by using the first-part side sound generation unit. After the specified object moves closer, the electronic device may play the audio data of the specified object by using the second-part side sound generation unit. In some examples, the specified object moves from far to near on the video picture may be represented as that a volume of the specified object gradually increases. In this way, when the specified object moves upward or downward, because the first-part side sound generation unit is located above the second-part side sound generation unit, relative positions of the first-part side sound generation unit and the second-part side sound generation unit can better reflect the movement of the specified object in an up-down direction. When the specified object moves farther or closer, because the first-part side sound generation unit is farther away from the user than the second-part side sound generation unit, relative positions of the first-part side sound generation unit and the second-part side sound generation unit can better reflect a near-far relationship of the specified object.

It should be noted that, when playing the audio data of the specified object, the sound generation unit may pause playing audio data of the sound generation unit that is obtained by the electronic device based on the first mode and the audio source data, or the sound generation unit may simultaneously play the audio data of the specified object and the audio data of the sound generation unit that is obtained by the electronic device based on the first mode and the audio source data.

In a possible implementation, the electronic device includes one or more sound generation units, and the one or more sound generation units include one or more first-part side sound generation units. In the one or more first-part side sound generation units, a part of the first-part side sound generation units are located on the housing A, a part of the first-part side sound generation units are located on the housing B, and a part of the first-part side sound generation units are located at the joint between the housing A and the housing B. The first-part side sound generation unit located on the housing A may be used to play the data of the low-frequency channel, and the first-part side sound generation unit located on the housing B may be used to play the data of the left surround channel and the right surround channel. The first-part side sound generation unit located at the joint between the housing A and the housing B may be divided into a top sound generation unit and a bottom sound generation unit. A position of the top sound generation unit in the first part is higher than a position of the bottom sound generation unit in the first part, the top sound generation unit may be used to play audio data of a specified sky object, and the bottom sound generation unit may be used to play audio data of a specified ground object.

The following describes a hardware structure of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, a mixed reality (mixed reality, MR) device, an artificial intelligence (artificial intelligence, AI) device, a wearable device, a vehicle-mounted device, a smart home device, and/or a smart city device. A specific type of the electronic device is not specially limited in embodiments of this application.

Optionally, in some embodiments of this application, the electronic device may be a desktop computer, a laptop computer, a handheld computer, a notebook computer, or a tablet computer connected to a keyboard.

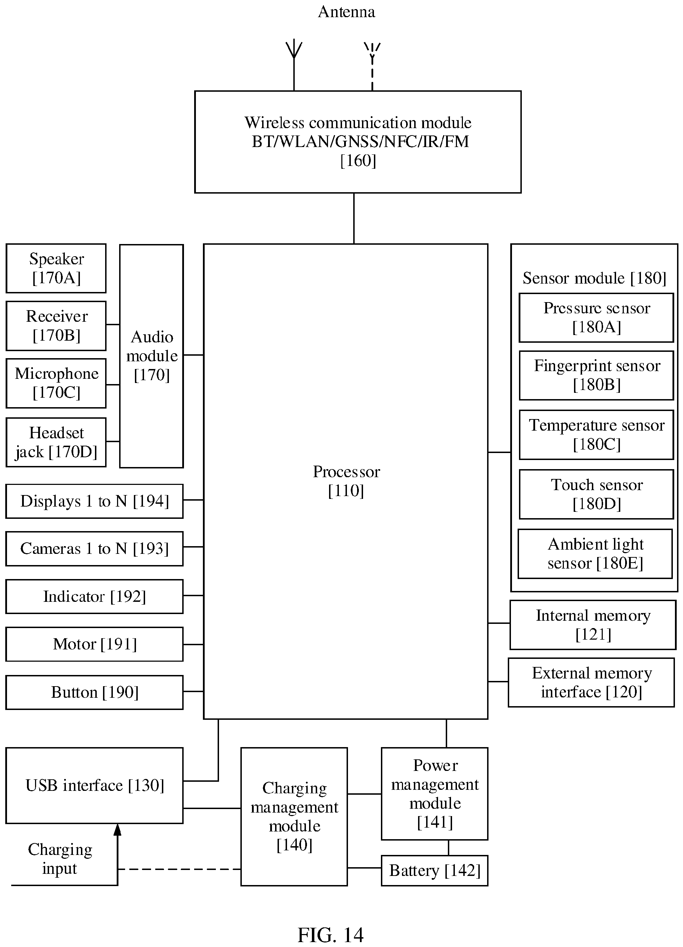

As shown in FIG. 14, the electronic device may include a processor 110, an external memory interface 120, an internal memory 121, a universal serial bus (universal serial bus, USB) interface 130, a charging management module 140, a power management module 141, a battery 142, an antenna, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like. The sensor module 180 may include but is not limited to a pressure sensor 180A, a fingerprint sensor 180B, a temperature sensor 180C, a touch sensor 180D, an ambient light sensor 180E, and the like.

It may be understood that the structure shown in this embodiment does not constitute a specific limitation on the electronic device. In some other embodiments of this application, the electronic device may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device. The processor 110 communicates with the display 194 through the DSI interface, to implement a display function of the electronic device.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device, or may be configured to transmit data between the electronic device and a peripheral device, or may be configured to connect to a headset for playing an audio by using the headset. The interface may be further configured to connect to another electronic device like an AR device.

It may be understood that an interface connection relationship between the modules shown in this embodiment is merely an example for description, and does not constitute a limitation on the structure of the electronic device. In some other embodiments of this application, the electronic device may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device may be implemented through the antenna, the wireless communication module 160, the modem processor, the baseband processor, and the like.

The antenna is configured to transmit and receive electromagnetic wave signals. Each antenna in the electronic device may be configured to cover one or more communication frequency bands. Different antennas may be further multiplexed, to improve antenna utilization.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as a mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device. The wireless communication module 160 may be one or more components integrating at least one communication processing module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-transmitted signal from the processor 110, perform frequency modulation and amplification on the signal, and convert a processed signal into an electromagnetic wave for radiation through the antenna.

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform on frequency energy.

The video codec is configured to compress or decompress a digital video. The electronic device may support one or more types of video codecs. In this way, the electronic device can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU may implement applications such as intelligent cognition of the electronic device, for example, image recognition, facial recognition, voice recognition, and text understanding.

The external memory interface 120 may be configured to connect to an external nonvolatile memory, to extend a storage capability of the electronic device. The external nonvolatile memory communicates with the processor 110 through the external memory interface 120, to implement a data storage function. For example, files such as music and videos are stored in the external nonvolatile memory.

The internal memory 121 may be configured to store computer-executable program code. The executable program code includes instructions. The processor 110 runs the instructions stored in the internal memory 121, to perform various function applications of the electronic device and data processing. The internal memory 121 may include a program storage area and a data storage area. The program storage area may store an operating system, an application required by at least one function (for example, a voice playing function or an image playing function), and the like. The data storage region may store data (for example, audio data and a phone book) created during use of the electronic device, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may be used to listen to music or answer a hands-free call by using the speaker 170A. In this embodiment of this application, the speaker 170A may play audio data.

The receiver 170B, also referred to as an "earpiece", is configured to convert an audio electrical signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending a voice message, a user may generate a sound near the microphone 170C through the mouth of the user, to input a sound signal to the microphone 170C. At least one microphone 170C may be disposed in the electronic device. In some other embodiments, two microphones 170C may be disposed in the electronic device, to implement a noise reduction function in addition to capturing a sound signal. In some other embodiments, three, four, or more microphones 170C may alternatively be disposed in the electronic device, to collect a sound signal, reduce noise, identify a sound source, implement a directional recording function, and the like.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. The fingerprint sensor 180B is configured to collect a fingerprint. The temperature sensor 180C is configured to detect a temperature. The touch sensor 180D is also referred to as a "touch component". The touch sensor 180D may be disposed on the display 194. A touchscreen formed by the touch sensor 180D and the display 194 is also referred to as a "touch screen". The touch sensor 180D is configured to detect a touch operation performed on or near the touch sensor. The ambient light sensor 180E is configured to sense ambient light brightness.

The button 190 includes a power button, a keyboard, a touchpad, and the like. The button 190 may be a mechanical button, or may be a touch button.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An audio playing method, applied to an electronic device, wherein the electronic device comprises a first part and a second part, the first part and the second part rotate or expand around a central axis of the electronic device, the first part comprises one or more first sound generation units, and the second part comprises one or more second sound generation units; and the method comprises:
when a sound effect mode of the electronic device is a first mode, receiving, by the electronic device, a first input for playing a first audio;
in response to the first input, controlling, by the electronic device, the one or more first sound generation units to play first audio data, and controlling the one or more second sound generation units to play second audio data, wherein the first audio data and the second audio data each comprise at least a part of audio source data of the first audio;
receiving, by the electronic device, a second input;
switching, by the electronic device, the sound effect mode of the electronic device from the first mode to a second mode in response to the second input;
receiving, by the electronic device, a third input for playing the first audio; and
in response to the third input, controlling, by the electronic device, the one or more first sound generation units to play third audio data, and controlling the one or more second sound generation units to play fourth audio data, wherein the third audio data and the fourth audio data each comprise at least a part of the audio source data of the first audio, and the first audio data is different from the third audio data.

2. The method according to claim 1, wherein channels comprised in the first audio data are partially/completely different from channels comprised in the third audio data.

3. The method according to claim 1 or 2, wherein
when the first mode is any one of a low-frequency enhancement mode, a dialogue enhancement mode, and a surround enhancement mode, at least a part of channels comprised in the first audio data are different from at least a part of channels comprised in the second audio data; and/or
when the first mode is a loudness enhancement mode, at least a part of channels of the first audio data are the same as at least a part of channels of the second audio data.

4. The method according to any one of claims 1 to 3, wherein the electronic device comprises one or more sound effect modes, and the one or more sound effect modes comprise the first mode and the second mode; and before the receiving, by the electronic device, a second input, the method further comprises:
displaying, by the electronic device, one or more sound effect mode options, wherein the one or more sound effect mode options are in a one-to-one correspondence with the one or more sound effect modes, the one or more sound effect mode options comprise a first mode option and a second mode option, the first mode option corresponds to the first mode, the second mode option corresponds to the second mode, the first mode option is marked, and the second input is an input for the second mode option; and
setting the sound effect mode of the electronic device to the second mode in response to the second input specifically comprises:
switching, by the electronic device, the sound effect mode of the electronic device from the first mode to the second mode in response to the second input, and unmarking the first mode option and marking the second mode option.

5. The method according to claim 4, wherein the first mode option is a low-frequency enhancement mode option, the first mode is the low-frequency enhancement mode, the first audio data comprises data of a low-frequency channel, and the second audio data comprises data of a left channel and data of a right channel, data of a left surround channel and data of a right surround channel, and/or data of a center channel.

6. The method according to claim 4, wherein the first mode option is a dialogue enhancement mode option, the first mode is the dialogue enhancement mode, the first audio data comprises data of a center channel, and the second audio data comprises data of a left channel and data of a right channel, data of a left surround channel and data of a right surround channel, and/or data of a low-frequency channel.

7. The method according to claim 4, wherein the first mode option is a loudness enhancement mode option, the first mode is the loudness enhancement mode, the first audio data comprises data of a left channel and data of a right channel, and the second audio data comprises the data of the left channel and the data of the right channel.

8. The method according to claim 7, comprising: when the electronic device comprises one first sound generation unit, playing, by the electronic device, the data of the left channel and the data of the right channel of the first audio data by using the one first sound generation unit; or
when the electronic device comprises two first sound generation units, playing, by the electronic device, the data of the left channel by using one first sound generation unit, and playing the data of the right channel by using the other first sound generation unit; or
if the electronic device comprises three or more first sound generation units, playing, by the electronic device, the data of the left channel by using at least one first sound generation unit, playing the data of the right channel by using at least one first sound generation unit, and playing the data of the left channel and the data of the right channel of the second audio data by using at least one first sound generation unit.

9. The method according to claim 4, wherein the first mode option is a surround enhancement mode option, the first mode is the surround enhancement mode, the first audio data comprises data of a left surround channel and data of a right surround channel, and the second audio data comprises data of a left channel and data of a right channel, data of a center channel, and/or data of a low-frequency channel.

10. The method according to any one of claims 4 to 9, wherein when the electronic device displays the one or more sound effect mode options, the method further comprises:
displaying, by the electronic device, a slider bar, wherein
if the first mode option is the loudness enhancement mode option, the low-frequency enhancement mode option, or the dialogue enhancement mode option, when a value of the slider bar is a first value, a volume at which the electronic device plays the first audio data is a third volume, or when a value of the slider bar is a second value, a volume at which the electronic device plays the first audio data is a fourth volume, wherein the first value is less than the second value, and the third volume is lower than the fourth volume; or
if the first mode option is the surround mode option, when a value of the slider bar is a third value, a distance between an analog audio source and a user is a third distance when the electronic device plays the first audio data, or when a value of the slider bar is a fourth value, a distance between an analog audio source and a user is a fourth distance when the electronic device plays the first audio data, wherein the third value is less than the fourth value, and the third distance is shorter than the fourth distance.

11. The method according to any one of claims 1 to 10, wherein the method further comprises:
receiving, by the electronic device, a fourth input for playing a first video;
in response to the fourth input, identifying, by the electronic device, one or more objects in a video picture of the first video, and identifying audio data of the one or more objects in an audio file of the first video, wherein the one or more objects comprise a first object; and
playing, by the electronic device, audio data of the first object by using a sound generation unit closest to the first object in the one or more first sound generation units and/or the one or more second sound generation units.

12. The method according to any one of claims 1 to 11, wherein a first sound generation unit located at a first position is configured to play a sky sound; and/or
a first sound generation unit located at a second position is configured to play a ground sound, wherein a distance between the first position and the central axis is greater than a distance between the second position and the central axis; and/or
a first sound generation unit located at a third position is configured to play the data of the left channel, and a first sound generation unit located at a fourth position is configured to play the data of the right channel, wherein the third position is located on a left side of the first part, and the fourth position is located on a right side of the first part; and/or
a first sound generation unit located at a fifth position is configured to play the data of the left surround channel, and a first sound generation unit located at a sixth position is configured to play the data of the right surround channel, wherein the third position is located on the left side of the first part, and the fourth position is located on the right side of the first part.

13. The method according to any one of claims 1 to 12, wherein the electronic device is a notebook computer, the first part comprises a display of the electronic device, and the second part comprises a keyboard and/or a touchpad of the electronic device.

14. The method according to claim 13, wherein the first part of the electronic device comprises a first housing and a second housing, and the first housing comprises the display of the electronic device; and the first mode is the surround enhancement mode, and a first sound generation unit located at the first housing is configured to drive the first housing to play the first audio data; or
the first mode is the low-frequency enhancement mode, and a first sound generation unit located at the second housing is configured to drive the second housing to play the first audio data.

15. The method according to any one of claims 1 to 12, wherein the electronic device is a foldable screen device, the first part comprises a first screen, the second part comprises a second screen, a folding manner of the electronic device is left-right folding, and the electronic device comprises a folded state and an unfolded state; and
if the electronic device is in the folded state, a sound generation unit that is in the one or more first sound generation units and the one or more second sound generation units and that is located on a first side of the electronic device is configured to play the data of the left channel, and a sound generation unit that is in the one or more first sound generation units and the one or more second sound generation units and that is located on a second side of the electronic device is configured to play the data of the right channel; or a sound generation unit that is in the one or more first sound generation units and the one or more second sound generation units and that is located on a first side of the electronic device is configured to play the sky sound, and a sound generation unit that is in the one or more first sound generation units and the one or more second sound generation units and that is located on a second side of the electronic device is configured to play the ground sound, wherein the first side is different from the second side; or
if the electronic device is in the unfolded state, the one or more first sound generation units are configured to play the data of the left channel, and the one or more second sound generation units are configured to play the data of the right channel; or the one or more first sound generation units are configured to play the data of the left surround channel, and the one or more second sound generation units are configured to play the data of the right surround channel.

16. The method according to any one of claims 1 to 12, wherein the electronic device is a foldable screen device, the first part comprises a first screen, the second part comprises a second screen, a folding manner of the electronic device is up-down folding, and the electronic device comprises a folded state and an unfolded state; and
if the electronic device is in the folded state, the one or more first sound generation units and the one or more second sound generation units play the audio source data; or
if the electronic device is in the unfolded state, the one or more first sound generation units are configured to play the data of the left channel, and the one or more second sound generation units are configured to play the data of the right channel; or the one or more first sound generation units are configured to play the sky sound, and the one or more second sound generation units are configured to play the ground sound.

17. The method according to any one of claims 11 to 16, wherein the sky sound comprises one or more of a thunder sound, a sound of a flying object, and a wind sound, and the ground sound comprises one or more of a footstep sound, an insect sound, and a rain sound.

18. The method according to any one of claims 1 to 17, wherein the audio source data comprises data of a channel required by the first audio data in the first mode, and a quantity of channels other than the channel of the first audio data in the audio source data is a first quantity; and the method further comprises:
if the first quantity is less than a quantity of second sound generation units, upmixing, by the electronic device, the audio source data, or copying data of a channel other than the first audio data in the audio source data, to obtain fifth audio data, wherein the fifth audio data comprises the data of the channel required by the first audio data, a quantity of channels other than the channel of the first audio data in the fifth audio data is the same as the quantity of second sound generation units, and the second audio data comprises data of the channel other than the channel of the first audio data in the fifth audio data; or
if the first quantity is greater than a quantity of second sound generation units, downmixing, by the electronic device, the audio source data, or superimposing data of a part of channels in the audio source data, to obtain sixth audio data, wherein the sixth audio data comprises the data of the channel required by the first audio data, a quantity of channels other than the channel of the first audio data in the sixth audio data is the same as the quantity of second sound generation units, and the second audio data comprises data of the channel other than the channel of the first audio data in the sixth audio.

19. An electronic device, comprising one or more processors, one or more first sound generation units, one or more second sound generation units, and one or more memories, wherein the one or more memories, the one or more first sound generation units, and the one or more second sound generation units are separately coupled to the one or more processors, the one or more memories are configured to store computer program code, the computer program code comprises computer instructions, and when the one or more processors execute the computer instructions, the electronic device is enabled to perform the method according to any one of claims 1 to 18.

20. A computer-readable storage medium, comprising computer instructions, wherein when the computer instructions are run on an electronic device, the electronic device is enabled to perform the method according to any one of claims 1 to 18.

21. A chip system, wherein the chip system is applied to an electronic device, the chip system comprises one or more processors, and the one or more processors are configured to invoke computer instructions, so that the electronic device performs the method according to any one of claims 1 to 18.
